# NEUE EUROPÄISCHE PATENTSCHRIFT

(11) **EP 1 894 752 B2**
(45) Veröffentlichungstag und Bekanntmachung des Hinweises auf die Entscheidung über den Einspruch: **09.07.2014**
(45) Hinweis auf die Patenterteilung: 28.01.2009
(21) Anmeldenummer: 06018340.7
(22) Anmeldetag: 01.09.2006
(51) Int. Cl.: B60D 1/54

(54) **Anhängerkupplung mit ein- und ausfahrbarem Zughaken**
Trailer coupling with extensible and retractable tow hook
Attelage de remorque avec crochet extensible et rétractable

(43) Veröffentlichungstag der Anmeldung: 05.03.2008
(73) Patentinhaber: Thule Towing Systems B.V., 7951 CX Staphorst (NL)
(72) Erfinder: Lorei, Herbert, 36088 Hünfeld (DE)
(74) Vertreter: Hammond, Andrew David

(56) Entgegenhaltungen:
- EP-A- 1 634 730
- EP-A- 1 637 364
- EP-A- 1 650 059
- EP-A1- 1 407 901
- WO-A-03/072375
- WO-A-2005/110781

## Beschreibung

Die Erfindung betrifft eine Anhängerkupplung an einem Fahrzeug und auch eine Anhängerkupplung als solche, die für eine Montage an einem Fahrzeug vorgesehen ist. Die Anhängerkupplung umfasst einen ein- und ausfahrbaren Zughaken, an den in einer ausgefahrenen, operativen Position ein Anhänger angehängt werden kann. Der Zughaken ist aus der operativen Position in eine inoperative Position einfahrbar, so dass er im Fahrbetrieb ohne Anhänger nicht stört.

Aus der EP 1 634 730 A1 ist eine Anhängerkupplung mit einem Zughaken bekannt, der mittels eines Kugelgelenks ein- und ausfahrbar gelagert ist. Der Zughaken ist per Hand ein- und ausfahrbar. Beschrieben wird ferner ein Verriegelungsmechanismus für die Verriegelung des Zughakens in wahlweise einer Betriebsstellung und einer Ruhestellung.

Die WO 03/072375 A1 offenbart eine Anhängerkupplung mit einem ebenfalls um mindestens zwei rotatorische Achsen beweglich gelagerten Zughaken, einem Antrieb für das Ein- und Ausfahren des Zughakens und einem Getriebe, das Antriebsdrehbewegungen des Antriebs in überlagerte Rotationsbewegungen des Zughakens umwandelt. Der Zughaken und der Antrieb sind gemeinsam schwenk- und drehbeweglich. Der Antrieb weist eine Ausgangswelle mit einem Schneckenrad auf, das mit einem am Fahrzeug ortsfesten Abstützrad in einem Zahneingriff ist, so dass die Antriebsdrehbewegung in eine Schwenkbewegung des Antriebs und wegen dessen fester Abstützung am Zughaken in die Schwenkbewegung des Zughakens umgewandelt wird. Die Schwenkbewegung wird mittels einer Kurvensteuerung in eine Querbewegung einer Zahnstange umgewandelt, die mit einem unbeweglich mit dem Zughaken verbundenen Zahnrad in einem Zahneingriff steht, so dass die Querbewegungen der Zahnstange eine Drehbewegung des Zughakens um eine quer zur Schwenkachse weisende Drehachse bewirken.

Eine Anhängerkupplung mit einem Zughaken, dessen Bewegungsablauf bei dem Ein- und Ausfahren besonders günstig ist, geht aus der WO 2005/110781 A1 hervor. Der Zughaken ist um mehrere nicht parallele, d.h. paarweise jeweils winklig zueinander weisende Rotationsachsen bewegbar. Beim Einfahren wird er um eine Querachse des Fahrzeugs nach unten gekippt, anschließend um eine Hochachse eingeschwenkt und im eingeschwenkten Zustand um eine Längsachse des Fahrzeugs wieder nach oben gekippt. Auf diese Weise kann der Zughaken raumsparend mit Schwenkbewegungen um drei unterschiedliche Achsen vor einen hinteren Stoßfänger des Fahrzeugs in die inoperative Position bewegt werden. Der Zughaken weist an einem dem Fahrzeug nahen proximalen Ende einen Kugelkopf auf, der mit einer Lagerkalotte ein sphärisches Lager für den Zughaken bildet. Der Bewegungsablauf bei dem Ein- und Ausfahren wird mittels eines Kurvengetriebes gesteuert. Von dem Kugelkopf des Zughakens ragt ein Nocken ab, der ein Eingriffsglied des Kurvengetriebes bildet. Das Kurvengetriebe weist zwei relativ zueinander bewegliche Führungsbahnen auf, die den Nocken jeweils im Gleitkontakt führen. Die Lagerkalotte bildet eine der Führungsbahnen, ein relativ zu der Lagerkalotte und dem Kugelkopf drehbewegliches Verstellglied bildet die andere Führungsbahn. Das Verstellglied wird über einen Riemen von einem Elektromotor um die Hochachse drehangetrieben. Bei einer Drehbewegung des Verstellglieds gleitet der Nocken an den beiden Führungsbahnen entlang und wird entsprechend der Geometrie der Führungsbahnen wie vorstehend beschrieben geschwenkt.

Es ist eine Aufgabe der Erfindung, eine einfache und kompakte Anhängerkupplung mit ein- und ausfahrbarem Zughaken zu schaffen.

Die Erfindung geht von einer Anhängerkupplung aus, die eine Lagerungseinrichtung und einen von der Lagerungseinrichtung abragenden Zughaken aufweist. Die Lagerungseinrichtung dient der Montage der Anhängerkupplung an einem Fahrzeug, insbesondere Personenkraftfahrzeug. Sie lagert den Zughaken um wenigstens zwei, vorzugsweise um drei Kupplungsachsen rotatorisch beweglich. Die Kupplungsachsen weisen paarweise je winklig zueinander, d.h. die Kupplungsachsen sind zueinander nicht parallel. Bei mehr als zwei Kupplungsachsen weist keine der Kupplungsachsen parallel zu einer der beiden anderen. Der Zughaken weist somit zwei oder drei Freiheitsgrade der Rotation auf. Es wird zwar bevorzugt, wenn die physikalischen Kupplungsachsen, d.h. die Achsen, um die der Zughaken physikalisch schwenkt oder dreht, jeweils paarweise im rechten Winkel zueinander weisen, unumgänglich erforderlich ist dies jedoch nicht. Über die Freiheitsgrade der Rotation hinaus kann der Zughaken auch in einem oder mehreren Freiheitsgraden der Translation bewegbar sein. Eine Translationsbewegung in Längsrichtung des Fahrzeugs ermöglicht zwar einen einfachen Bewegungsablauf und ist daher ebenfalls eine Option, andererseits übt der Anhänger in Fahrzeuglängsrichtung die größten Kräfte aus, so dass bei einer Bewegbarkeit in Längsrichtung im besonderem Maße für eine Blockierung des Zughakens in der operativen Position gesorgt werden muss. Bevorzugten Ausführungen entspricht es, wenn der Zughaken nur rotatorisch beweglich ist.

Nach der Erfindung wird die Bewegung des Zughakens um wenigstens eine der Kupplungsachsen mittels einer Kurvenbahn und eines Verstellrads bewirkt, die miteinander in Kontakt sind. Die Kurvenbahn ist an dem Zughaken vorgesehen, und das Verstellrad wird von der Lagerungseinrichtung um eine Verstellradachse drehbar gelagert. Falls die Anhängerkupplung wie bevorzugt über einen motorischen Drehantrieb für das Verstellrad verfügt, kann das Verstellrad, falls es drehsteif mit dem Rotor des Motors verbunden ist, über den Stator des Motors an der Lagerungseinrichtung abgestützt und in diesem Sinne von der Lagerungseinrichtung drehbar gelagert werden. Bevorzugter ist das Verstellrad jedoch als solches drehbar gelagert, so dass der Motor nicht die auf das Verstellrad wirkenden Querkräfte aufnehmen muss. Der Zughaken ist über die Kurvenbahn mit dem Verstellrad in einem Verstelleingriff und in dem Verstelleingriff um die wenigstens eine der Kupplungsachsen, vorzugsweise um die wenigstens zwei Kupplungsachsen rotatorisch beweglich. Falls der Zughaken auch noch um eine dritte Kupplungsachse beweglich ist, wird vorzugsweise auch die Rotationsbewegung um diese weitere Achse mittels des Verstelleingriffs des Verstellrads und der Kurvenbahn bewirkt. Das Verstellrad ist im Verstelleingriff mit der Kurvenbahn in einem Rollkontakt, wobei die Übertragung der Drehbewegung des Verstellrads auf die Kurvenbahn und in der Folge auf den Zughaken auf einem Reibschluss von Verstellrad und Kurvenbahn beruhen kann. Bevorzugter wälzen das Verstellrad und die Kurvenbahn jedoch aneinander ab. Für den Wälzkontakt sind das Verstellrad und die Kurvenbahn je mit einer Verzahnung versehen, so dass die Verzahnung des Verstellrads im Verstelleingriff mit der Verzahnung der Kurvenbahn kämmt.

Die erfindungsgemäße Bewegungssteuerung mittels Verstellrad und Kurvenbahn, wobei die Kurvenbahn am Zughaken vorgesehen ist, vereinfacht die Konstruktion, da eine Kurvenbahn nur noch an einem Teil, dem Zughaken, erforderlich ist und nicht mehr, wie im Stand der Technik, zwei relativ zu dem Zughaken und zueinander bewegliche Kurvenbahnen benötigt werden. Der Verschleiß wird verringert, da das Verstell- oder Eingriffsglied des Kurvengetriebes, nach der Erfindung das Verstellrad, nicht in einem Gleitkontakt an Führungsflächen entlang fährt, die dem Zughaken die gewünschte Bewegung aufzwingen. Die für die Steuerung des Bewegungsablaufs aufzunehmenden Kräfte werden dadurch verringert. Im Ergebnis können die Abmessungen der für die Lagerung des Zughakens und die Steuerung des Bewegungsablaufs erforderlichen Komponenten, d.h. der Lager- und Steuerungsteil der Anhängerkupplung, verkleinert werden.

Die Kurvenbahn ist um wenigstens eine der Kupplungsachsen gekrümmt, so dass der Zughaken bei dem Abrollen des Verstellrads oder des Wälzkreises eines verzahnten Verstellrads rotatorisch um die wenigstens eine der Kupplungsachsen bewegt, vorzugsweise geschwenkt wird. Um die rotatorische Bewegung des Zughakens um die wenigstens eine andere Kupplungsachse zu bewirken, können ein weiteres Verstellrad und am Zughaken eine weitere Kurvenbahn vorgesehen sein. In derartigen Ausführungen würde die weitere Kurvenbahn durch die rotatorische Bewegung des Zughakens, die von dem einen Eingriffspaar aus Verstellrad und Kurvenbahn bewegt wird, in den Verstelleingriff mit dem anderen Verstellrad bewegt werden, um in diesem weiteren Verstelleingriff dann die rotatorische Bewegung um die betreffende Kupplungsachse auszuführen. Bevorzugter genügen jedoch ein einziges Verstellrad und eine einzige Kurvenbahn, um den Zughaken um die wenigstens zwei Kupplungsachsen rotatorisch bewegen zu können.

In bevorzugten Ausführungen fluchtet eine der Kupplungsachsen im Verlaufe der Bewegung des Zughakens mit der Verstellradachse. Wenn die betreffende Kupplungsachse und die Verstellradachse miteinander in einer Flucht sind, kann sich der Zughaken einfach rotatorisch um die Verstellradachse bewegen. Das Verstellrad muss für diese Rotationsbewegung nicht auf der Kurvenbahn abrollen. Dies vereinfacht die Geometrie der Kurvenbahn. Für die Rotationsbewegung des Zughakens um nur zwei Kupplungsachsen genügt es in derartigen Ausführungen, wenn die Kurvenbahn nur um eine dieser Kupplungsachsen gekrümmt ist, da die Rotationsbewegung um die fluchtende Kupplungsachse eine gemeinsame Rotationsbewegung von Zughaken und Verstellrad ist, bei der das Verstellrad bei seiner Drehbewegung den Zughaken einfach mitnimmt.

Ist der Zughaken nur um zwei Kupplungsachsen rotatorisch beweglich, kann die Kurvenbahn zwei Zweige aufweisen, von denen jeder um eine und jeder der Zweige um eine andere der Kupplungsachsen gekrümmt ist. Die Zweige gehen vorteilhafterweise kontinuierlich ineinander über. Bevorzugter besteht die Kurvenbahn im Falle solch einer Beweglichkeit nur aus einem solchen Zweig, und die Bewegung um die verbleibende Achse ist die beschriebene gemeinsame Bewegung von Verstellrad und Zughaken um die Verstellradachse.

Um bei fluchtenden Achsen die Schwerkraft für die gemeinsame Rotationsbewegung von Verstellrad und Zughaken nutzen zu können, weist die Verstellradachse im montierten Zustand der Anhängerkupplung vorzugsweise eine Achskomponente auf, die im üblichen kartesische Koordinatensystem des Fahrzeugs parallel zu der X-Achse oder Y-Achse ist. Die X-Achse ist in diesem Koordinatensystem die Längsachse des Fahrzeugs, und die Y-Achse ist eine zur Radarachse parallele Querachse. Im montierten Zustand hat die Verstellradachse in derartigen Ausführungen somit eine horizontale Achskomponente. Bevorzugt erstreckt sich die Verstellradachse im montierten Zustand der Anhängerkupplung in der X/Y-Ebene des Fahrzeugs. Ist die Verstellradachse beispielsweise parallel zu der Y-Achse, schwenkt der Zughaken bei entsprechender Drehbewegung des Verstellrads unterstützt von seinem Gewicht über seine Länge nach unten. Ist die Verstellradachse beispielsweise parallel zu der X-Achse des Fahrzeugs, schwenkt das vorzugsweise aufragende freie hintere Ende des Zughakens zur Seite. In beiden Fällen kann der Zughaken nach Erreichen der abgeschwenkten Zwischenposition in Fahrtrichtung unter das Fahrzeug bewegt werden, so dass er nach hinten nicht mehr vorsteht. Falls die Verstellradachse keine X- oder Y-Komponente aufweist, also parallel zur Hochachse des Fahrzeugs ist, wird eine abwärts gerichtete Bewegung des Zughakens durch Abrollen des Verstellrads an der Kurvenbahn bewirkt. Die Abwärtsbewegung wird vorzugsweise durch einen Anschlagkontakt beendet. Falls eine der Kupplungsachsen in dem Anschlagkontakt mit der Verstellradachse fluchtet, können der Zughaken und das Verstellrad nun die gemeinsame Rotationsbewegung um die fluchtende Kupplungsachse, d.h. um die Hochachse ausführen. Eine Unterstützung durch die Schwerkraft findet hierbei jedoch nicht statt, die für das Ein- oder Ausschwenken erforderliche Kraft muss vom Verstellrad aufgebracht werden.

Falls der Zughaken wie bevorzugt auch noch um eine dritte Kupplungsachse rotatorisch beweglich ist, besteht die Kurvenbahn in bevorzugten Ausführungen aus zwei Zweigen, die vom Zughaken aus betrachtet nacheinander vom Verstellrad abgefahren werden. Im Koordinatensystem des Fahrzeugs wird allerdings nicht das Verstellrad, sondern der Zughaken bewegt, so dass sich von diesem Standpunkt aus gesehen die Bahnzweige nacheinander an den Verstellrad vorbeibewegen. Vorteilhafterweise gehen die Bahnzweige kontinuierlich ineinander über. Einer der Zweige ist um eine erste der Kupplungsachsen, und der andere Zweig ist um eine zweite der Kupplungsachsen gekrümmt. Die Kurvenbahn kann noch einen weiteren, dritten Zweig aufweisen, der um die verbleibende dritte Kupplungsachse gekrümmt ist. Vorzugsweise verläuft die Kurvenbahn über sämtliche Zweige kontinuierlich. Anstatt eines dritten Bahnzweigs gelangt in den bevorzugten Ausführungen jedoch eine der Kupplungsachsen am Ende eines der Bahnzweige in die Flucht mit der Verstellradachse, so dass die Rotationsbewegung um die betreffende Kupplungsachse eine gemeinsame Bewegung des Verstellrads und des Zughakens ist und der Verstellmechanismus mit nur zwei Bahnzweigen oder gegebenenfalls auch zwei getrennten Kurvenbahnen am Zughaken auskommt.

Die Kurvenbahn beschreibt um wenigstens eine der Kupplungsachsen in bevorzugten Ausführungen einen Teilkreis, d.h. einen Kreisbogen, der sich um die Kupplungsachse über einen Winkel erstreckt, der zumindest im Wesentlichen dem Winkel der rotatorischen Bewegbarkeit des Zughakens um die betreffende Kupplungsachse entspricht. Umfasst die Kurvenbahn mehrere Bahnzweige, so gilt dies in den bevorzugten Ausführungen für wenigstens einen der Bahnzweige. Der verbleibende weitere Bahnzweig oder wenigstens einer der mehreren weiteren Bahnzweige beschreibt um die andere Kupplungsachse oder eine der anderen Kupplungsachsen vorzugsweise ebenfalls einen Teilkreis, zweckmäßigerweise über einen Winkel, der zumindest im Wesentlichen dem Winkel entspricht, um den der Zughaken um die betreffende andere Kupplungsachse bewegt werden muss. Die Bahnzweige weisen entsprechend dem Winkel zwischen den zugeordneten Kupplungsachsen zueinander. Die Bahnzweige weisen vorzugsweise in einem rechten Winkel zueinander, andere Winkelstellungen sind jedoch grundsätzlich ebenfalls realisierbar entsprechend der Ausrichtung der Kupplungsachsen. Erstreckt sich die Kurvenbahn über zwei oder mehr paarweise je winklig zueinander weisende Bahnzweige, sind die Übergänge jeweils benachbarter Bahnzweige vorteilhafterweise gerundet, so dass das Verstellrad die gesamte Kurvenbahn in einem gleichmäßigen, ruckfreien Verstelleingriff abfahren kann.

Das Verstellrad ist vorteilhafterweise ein Kegelrad. Ein Kegelrad ist für das Abfahren einer Kurvenbahn vorteilhaft, die um zwei nicht parallele Achsen gekrümmt ist.

Das Verstellrad ist relativ zu der Lagerungseinrichtung in Querrichtung zu der Verstellradachse vorteilhafterweise nicht beweglich. Das Verstellrad weist vorzugsweise nur den Freiheitsgrad der Rotation um die Verstellradachse auf und ist in diesem Sinne relativ zu der Lagerungseinrichtung ortsfest. Eine gewisse axiale Nachgiebigkeit, die jedoch nicht dazu führen darf, dass sich das Verstellrad aus dem Verstelleingriff bewegen kann, wäre tolerierbar. Bevorzugter ist das Verstellrad jedoch auch axial nicht beweglich.

In einem bevorzugten Bewegungsablauf schwenkt der Zughaken, bezogen auf den montierten Zustand, aus der operativen Position um eine Kupplungsquerachse nach unten, um eine Kupplungshochachse zum Fahrzeug, vorzugsweise unter einem Stoßfänger hindurch, und um eine Kupplungslängsachse nach oben in die inoperative Position. Bei dem Ausfahren werden die Bewegungen vorzugsweise in umgekehrter Reihenfolge ausgeführt. In einem alternativen Bewegungsablauf führt der Zughaken aus der operativen Position eine Rotationsbewegung um die Kupplungslängsachse aus, schwenkt um die Kupplungshochachse zum Fahrzeug, vorzugsweise vor einem Stoßfänger, und führt dann eine Rotationsbewegung um die Kupplungsquerachse in die inoperative Position aus. Die jeweilige Rotationsbewegung im eingeschwenkten Zustand kann entfallen, wenn der Zughaken in dem nicht wieder hoch geschwenkten Zustand nicht stört, so dass in derartigen Ausführungen die inoperative Position bereits unmittelbar nach dem Einschwenken erreicht ist. Die genannten Rotationsbewegungen werden vorzugsweise hintereinander ausgeführt, so dass der Zughaken bei jeder Rotationsbewegung nur um eine von wenigstens zwei, vorzugsweise drei Kupplungsachsen bewegt wird, die vorzugsweise rechtwinklig zueinander weisen. Die jeweils "aktive" Kupplungsachse, d.h. die Achse, um die der Zughaken gerade die Rotationsbewegung ausführt, wird vorzugsweise mittels eines den Zughaken bei der jeweiligen Rotationsbewegung führenden Führungsglieds fixiert oder mittels eines Anschlagglieds, um das der Zughaken die betreffende Rotationsbewegung ausführt. Das Führungsglied kann auch in Kombination das Anschlagglied bilden, indem es den Zughaken bei der Rotationsbewegung um eine oder zwei der Kupplungsachsen in einem in Umfangsrichtung der jeweiligen Kupplungsachse bestehenden Führungseingriff führt und der Zughaken bei der Rotationsbewegung um eine andere der Kupplungsachsen um das Führungsglied dreht.

Das Wort "oder" wird durchweg in der Bedeutung von "und/oder" verwendet, soweit sich aus dem jeweiligen Zusammenhang nicht notwendigerweise eine andere Bedeutung ergibt.

In bevorzugten Ausführungen weisen der Zughaken einen Lagerkopf und die Lagerungseinrichtung ein Lagergehäuse auf. Der Lagerkopf und das Lagergehäuse bilden ein Gelenk, in dem der Zughaken um wenigstens zwei Kupplungsachsen, bevorzugterweise drei Kupplungsachsen, rotatorisch beweglich ist. Die Kurvenbahn ist an einem Umfang des Lagerkopfs angeordnet und folgt einer Oberflächenkontur des Lagerkopfs. Die Kurvenbahn kann in einem Stück mit dem Lagerkopf geformt sein, beispielsweise an dem äußeren Umfang des Lagerkopfs aus dem Material des Lagerkopfs gefräst sein. Fertigungstechnisch kann es jedoch zweckmäßig sein, die Kurvenbahn oder zumindest ein Stück der Kurvenbahn an einem oder mehreren separaten Körper(n) zu formen und den oder die Körper am Lagerkopf zu befestigen. So kann die Kurvenbahn insbesondere in die äußere Umfangsfläche des Lagerkopfs eingelassen sein, indem an dem äußeren Umfang im Lagerkopf eine Ausnehmung geformt und der die Kurvenbahn bildende Körper oder die mehreren Körper in der Ausnehmung angeordnet ist oder sind.

Der Lagerkopf und das Lagergehäuse können miteinander insbesondere ein sphärisches Gelenk bilden, d.h. ein Gelenk in dem sich die Kupplungsachsen der rotatorischen Beweglichkeit schneiden. In derartigen Ausführungen ist der Lagerkopf vorzugsweise sphärisch, d.h. er bildet eine sphärische Lagerfläche. Das Lagergehäuse bildet entsprechend eine sphärische Lagergegenfläche. Alternativ kann ein sphärisches Gelenk beispielsweise auch mit einem Kreuzkopf gebildet werden. Ein kugelförmiger Lagerkopf hat jedoch den Vorteil, dass die Kurvenbahn der Kugelfläche des Lagerkopfs folgend geformt werden kann. Vorzugsweise bildet die Kurvenbahn einen Teilkreis um eine der Kupplungsachsen oder je einen Teilkreis um mehrere Kupplungsachsen. Besonders günstige geometrische Verhältnisse ergeben sich, wenn die Kurvenbahn auf der Kugelfläche einem Meridian um eine der Kupplungsachsen folgt, so dass die Drehachse des Verstellrads sich bei dem Abrollen an der Kurvenbahn vom Lagerkopf aus gesehen auf dem betreffenden Meridian bewegt. Die Kurvenbahn selbst verläuft somit äquidistant zu dem Meridian, wobei der Radius des Verstellrads oder des Wälzkreises des bevorzugt verzahnten Verstellrads den Abstand zwischen dem Meridian und der Kurvenbahn vorgibt.

Um die Komponenten der Bewegungssteuerung im Zugbetrieb der Anhängerkupplung zu entlasten, umfasst die Anhängerkupplung in bevorzugten Ausführungen separat von der Bewegungssteuerung eine Blockiereinrichtung, die den Zughaken form- oder kraftschlüssig in der operativen Position blockiert. Vorteilhafterweise blockiert sie den Zughaken auch in der eingefahrenen inoperativen Position. Die Blockiereinrichtung entlastet die Komponenten der Bewegungssteuerung nicht nur im Zugbetrieb, sondern auch ohne Anhänger von den im sonstigen Fahrbetrieb auftretenden Erschütterungen, indem sie Relativbewegungen zwischen dem Zughaken und der Lagerungseinrichtung weitgehend verhindert. Aufgrund der Trennung der beiden Funktionen des Steuerns der Bewegung und des Blockierens des Zughakens können die Bewegungssteuerung und die Blockiereinrichtung im Hinblick auf die jeweilige Funktion optimal gestaltet werden. Die Verlagerung der Funktion des Blockierens in eine separate Blockiereinrichtung erhöht auch die Lebensdauer der Bewegungssteuerung.

Die Blockiereinrichtung umfasst wenigstens ein Blockierglied, das von der Lagerungseinrichtung in und aus einem Blockiereingriff mit dem Zughaken bewegbar gelagert wird. Das Blockierglied bewegt sich bei dieser Bewegung auch relativ zu dem Verstellrad, woraus sich die funktionale Trennung von Bewegungssteuerung und Blockiereinrichtung ergibt. In dem Blockiereingriff ist das Blockierglied mit dem Zughaken in einem Kraftschluss oder einem Formschluss. Vorteilhafterweise ist es im Blockiereingriff in einem Form- und einem Kraftschluss mit dem Zughaken. Der Zughaken weist ein Blockiergegenelement auf, das im Blockiereingriff das Blockierglied kontaktiert. Das Blockiergegenelement ist vorteilhafterweise an die Form des Blockierglieds angepasst, vorzugsweise ist es an das Blockierglied angeschmiegt geformt, um eine möglichst große Kontaktfläche zu erhalten. Das Blockiergegenelement bildet vorzugsweise eine äußere Umfangsfläche, d.h. eine Außenfläche, des Zughakens, um auf diese Weise eine möglichst große Kontaktfläche im Blockiereingriff zu erhalten. Das Blockiergegenlement kann insbesondere an dem genannten Lagerkopf des Zughakens geformt sein.

In bevorzugten Ausführungen beruht der Blockiereingriff sowohl auf Formschluss als auch auf Kraftschluss. Mittels des Kraftschlusses wird der Zughaken klemmend in der blockierten Position gehalten, so dass im Blockiereingriff keinerlei Relativbewegungen mehr zwischen dem Zughaken und dem Blockierglied auftreten können. Um eine kraftschlüssige Verbindung zu erhalten, ist es von Vorteil, wenn das Blockierglied sich in die Richtung, in die es in den Blockiereingriff bewegt wird, verjüngt. Seine Kontaktfläche für den Blockiereingriff kann insbesondere konisch sein.

Die Blockiereinrichtung umfasst ein Antriebsglied für das Blockierglied. Vorzugsweise wird das Antriebsglied drehbar von der Lagerungseinrichtung gelagert und ist mit dem Blockierglied so gekoppelt, dass das Blockierglied durch eine Drehbewegung des Antriebsglieds in und aus dem Blockiereingriff bewegt wird. Das Antriebsglied kann insbesondere eine Spindel sein, die mit dem Blockierglied in einem Gewindeeingriff ist. Die Lagerungseinrichtung führt das Blockierglied verdrehgesichert, so dass es sich nicht relativ zu der Spindel um die Gewindeachse drehen kann. Eine Drehbewegung der Spindel verursacht daher eine Bewegung des Blockierglieds längs der Spindel.

Die Blockiereinrichtung umfasst vorzugsweise ein weiteres Blockierglied, das mit dem gleichen Blockiergegenelement oder einem weiteren Blockiergegenelement des Zughakens wie beschrieben zusammenwirkt. Die vorstehenden Ausführungen zu dem einen Blockierglied gelten für das weitere Blockierglied gleichermaßen. Die Lagerungseinrichtung lagert die beiden Blockierglieder vorteilhafterweise aufeinander zu und voneinander weg bewegbar. Hierbei wird es bevorzugt, wenn die Blockierglieder in den Blockiereingriff aufeinander zu bewegt werden. Die beiden Blockierglieder können einzeln je mittels eines eigenen Antriebsglieds bewegt werden, beispielsweise je mittels einer im Gewindeeingriff befindlichen Spindel. Bevorzugter ist für die beiden Blockierglieder ein Antriebsglied gemeinsam vorgesehen, vorzugsweise die genannte Spindel, die in derartigen Ausführungen zwei Gewinde aufweist, eines im Gewindeeingriff mit dem einen Blockierglied und das andere im Gewindeeingriff mit dem weiteren Blockierglied, wobei die beiden Gewinde unterschiedlichen Drehsinn aufweisen, d.h. ein Links- und ein Rechtsgewinde sind, so dass die Blockierglieder bei einem Drehantrieb der Spindel in die eine Drehrichtung aufeinander zu und bei einem Drehantrieb in die andere Richtung voneinander weg bewegt werden.

Die beiden Blockierglieder sind vorteilhafterweise in Richtung ihrer Bewegbarkeit schwimmend gelagert, entweder einzeln oder vorzugsweise gemeinsam. Falls die beiden Blockierglieder von einem Antriebsglied gemeinsam angetrieben werden, beispielsweise der genannten Spindel, ist vorzugsweise das Antriebsglied gemeinsam mit den beiden Blockiergliedern schwimmend gelagert. Eine schwimmende Lagerung gewährleistet mit größerer Sicherheit, dass jedes der Blockierglieder ungeachtet von Fertigungstoleranzen oder Ungenauigkeiten der Montage in den Blockiereingriff mit dem Zughaken gelangt.

Vorteilhafte Merkmale der Erfindung werden auch in den Unteransprüchen und deren Kombinationen beschrieben.

Nachfolgend werden Ausführungsbeispiele der Erfindung anhand von Figuren erläutert. An den Ausführungsbeispielen offenbar werdende Merkmale bilden je einzeln und in jeder Merkmalskombination die Gegenstände der Ansprüche und auch die vorstehend beschriebenen Ausgestaltungen vorteilhaft weiter. Es zeigen:
- Figur 1: eine erfindungsgemäße Anhängerkupplung mit einem Zughaken und einem Lagergehäuse, das den Zughaken um mehrere Kupplungsachsen rotatorisch beweglich lagert,
- Figur 2: den Zughaken und das Lagergehäuse in einer Seitenansicht,
- Figur 3: den Zughaken in einer operativen Position und eine Blockiereinrichtung, die den Zughaken in dieser Position in einem Blockiereingriff blockiert,
- Figur 4: den Zughaken in der operativen Position bei gelöstem Blockiereingriff,
- Figur 5: den Zughaken in einer abgeschwenkten Zwischenposition,
- Figur 6: den Zughaken in einer inoperativen Position nach vollständigem Einfahren,
- Figur 7: den Zughaken und die Blockiereinrichtung in einer Ansicht auf eine Rückseite,
- Figur 8: den Zughaken und das Lagergehäuse in einem Längsschnitt,
- Figur 9: den Schnitt A-A der Figur 2,
- Figur 10: die Anhängerkupplung mit einer ersten Modifikation in einem Längsschnitt,
- Figur 11 1: die Anhängerkupplung der Figur 10 in einem Querschnitt,
- Figur 12: die Anhängerkupplung mit einer zweiten Modifikation in einem Längsschnitt und
- Figur 13: die Anhängerkupplung der Figur 12 in einem Querschnitt.

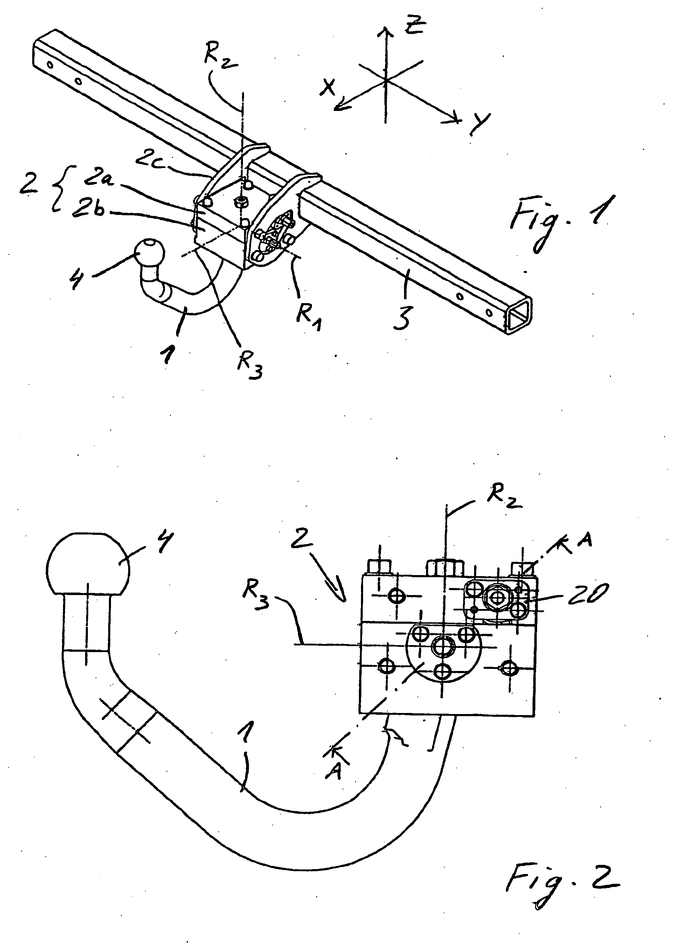

Figur 1 zeigt eine Anhängerkupplung für einen Personenkraftwagen in einer perspektivischen Sicht. Die Anhängerkupplung umfasst einen Zughaken 1 für einen Anhänger, beispielsweise einen Wohnwagen, und eine Lagerungseinrichtung mit einem Lagergehäuse 2 und einer Befestigungseinrichtung 3, die im Ausführungsbeispiel als Befestigungsholm gebildet ist. Die Befestigungseinrichtung 3 dient der Befestigung der Anhängerkupplung an dem Fahrzeug. Das Lagergehäuse 2 wird mittels eines linken und eines rechten Trägers 2c an der Befestigungseinrichtung 3 gehalten. Es besteht aus einem Oberteil 2a und einem Unterteil 2b, die miteinander verbunden sind. In Figur 1 ist das für Kraftfahrzeuge übliche kartesische Koordinatensystem eingezeichnet. In dem Koordinatensystem ist die X-Achse die Längsachse, die Y-Achse die Querachse und die Z-Achse die Hochachse des Fahrzeugs. Die Anhängerkupplung wird entsprechend ihrer in Figur 1 relativ zu dem X,Y,Z-Koordinatensystem dargestellten Ausrichtung an dem Fahrzeug befestigt, so dass der Zughaken 1 mit seinem von einem Kugelkopf gebildeten freien Hakenende 4 gegen die Fahrtrichtung nach hinten über einen Stoßfänger des Fahrzeugs hinaus vorragt. Die Lagerungseinrichtung, d. h. das Lagergehäuse 2 und die Befestigungseinrichtung 3, sind in Fahrtrichtung vor dem Stoßfänger angeordnet. Der Zughaken 1 ragt an einer Unterseite aus dem Lagergehäuse 2 und unter dem Stoßfänger hindurch einen Bogen beschreibend vor, so dass sein freies Hakenende 4 über einen unteren Rand des Stoßfängers nach oben hinausragt.

Der Zughaken 1 ist aus der in Figur 1 gezeigten operativen Position in eine inoperative Position und aus dieser wieder in die operative Position bewegbar. In der operativen Position kann im montierten Zustand der Anhängerkupplung ein Anhänger angehängt und vom Fahrzeug gezogen werden. In der inoperativen Position ragt der Zughaken 1 nach hinten nicht mehr über den Stoßfänger hinaus. Der Zughaken 1 des Ausführungsbeispiels ist in der inoperativen Position in Fahrtrichtung (-X) vor dem Stoßfänger angeordnet, so dass ihn der Stoßfänger verdeckt. Das Lagergehäuse 2 lagert den Zughaken 1 für das Ein-und Ausfahren um drei Kupplungsachsen R₁, R₂ und R₃ rotatorisch beweglich. Die Kupplungsachsen R₁, R₂ und R₃ sind paarweise zueinander rechtwinklig, d. h. sie bilden ein kartesisches Koordinatensystem. Im montierten Zustand fluchtet die Kupplungsachse R₃ mit einer in Bezug auf die Querrichtung Y zentralen Längsachse des Fahrzeugs (Kupplungslängsachse), die Kupplungsachse R₁ ist eine Querachse des Fahrzeugs (Kupplungsquerachse) und die Kupplungsachse R₂ ist eine Hochachse des Fahrzeugs (Kupplungshochachse).

Figur 2 zeigt den Zughaken 1 und das Lagergehäuse 2 in einer Seitenansicht auf die R₂/R₃-Ebene. Der Zughaken 1 nimmt wieder die operative Position ein. In der Darstellung der Figur 2 würde im montierten Zustand der Stoßfänger des Fahrzeugs in den Raum zwischen dem Lagergehäuse 2 und dem Hakenende 4 ragen. In der operativen Position sorgen ein am Zughaken 1 geformter Vorsprung 5 und eine am Lagergehäuse 2 angepasst geformte Ausnehmung für eine Blockierung des Zughakens 1 um die Kupplungshochachse R₂. Des Weiteren blockiert eine Blockiereinrichtung 20 den Zughaken 1 in der operativen Position, primär in Bezug auf die Kupplungsquerachse R₁, aber auch in Bezug auf die beiden anderen Kupplungsachsen R₂ und R₃.

Für die Überführung aus der operativen in die inoperative Position wird der Zughaken 1 relativ zu der Lagerungseinrichtung 2, 3 um die Kupplungsquerachse R₁ nach unten in eine Zwischenposition geschwenkt, bis das freie Hakenende 4 sich unter dem Höhenniveau des unteren Rands des Stoßfängers befindet. Der Schwenkwinkel um die Kupplungsachse R₁ kann beispielsweise zwischen 30° und 50°, vorzugsweise etwa 40° betragen. Aus der Zwischenposition wird der Zughaken 1 um die Kupplungshochachse R₂ zum Fahrzeug hin eingeschwenkt, vorzugsweise um etwa 90°. Schließlich wird er aus der eingeschwenkten Position wieder hochgeschwenkt, nun allerdings um die dritte Kupplungsachse R₃. Die Kupplungsachen R₁, R₂ und R₃ sind in Bezug auf die Lagereinrichtung 2, 3 und im eingebauten Zustand in Bezug auf das Fahrzeug fest.

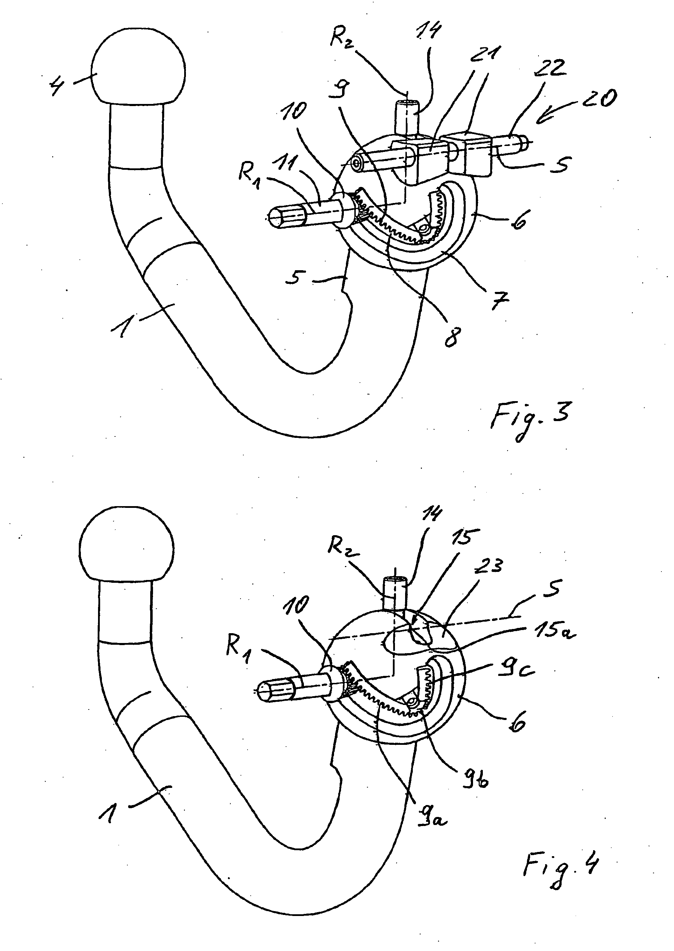

Figur 3 zeigt den Zughaken 1 nochmals in der operativen Position und in einem Blockiereingriff mit zwei Blockiergliedern 21 der Blockiereinrichtung 20. Das Lagergehäuse 2, das den Zughaken 1 und die Blockierglieder 21 lagert ist nicht dargestellt, um den Blick auf eine mechanische Bewegungssteuerung und die Blockiereinrichtung 20 frei zu geben.

An einem von dem Hakenende 4 abgewandten Ende des Zughakens 1 ist ein Lagerkopf 6 angeordnet, entweder an dem Zughaken 1 unbeweglich befestigt oder vorzugsweise in einem Stück mit dem Zughaken 1 geformt. Der Lagerkopf 6 hat über große Bereiche seines äußeren Umfangs die Form einer Kugeloberfläche. Der Lagerkopf 6 kann dementsprechend als Kugelkopf bezeichnet werden. Der kugelförmige Oberflächenbereich bildet die Lagerfläche des Zughakens 1. Das Lagergehäuse 2 bildet eine angepasste Lagergegenfläche entsprechend ebenfalls als Kugeloberfläche. Der Lagerkopf 6 und das Lagergehäuse 2 bilden zusammen ein sphärisches Gelenk. Die Kupplungsachsen R₁, R₂ und R₃ schneiden einander dementsprechend im Zentrum der Lagerfläche des Lagerkopfs 6.

Am äußeren Umfang des Lagerkopfs 6 ist eine Ausnehmung 7 geformt, in der eine verzahnte Kurvenbahn 9 angeordnet ist. Die Kurvenbahn 9 bildet zusammen mit einem Verstellrad 10 ein Kurvengetriebe. Das Verstellrad 10 wird von dem Lagergehäuse 2 ortsfest und um eine mit der Kupplungsachse R₁ fluchtende, d.h. identische Verstellradachse R₁ drehbar gelagert. Das Verstellrad 10 ist relativ zu dem Lagerkopf 6 an der Kurvenbahn 9 in einem Verstelleingriff abrollbar. Das Verstellrad 10 ist ein Zahnrad mit einer um die Verstellradachse bzw. Kupplungsachse R₁ umlaufenden Außenverzahnung. Die Kurvenbahn 9 ist mit einer Gegenverzahnung versehen. Der Verstelleingriff der Kurvenbahn 9 und des Verstellrads 10 ist dementsprechend ein Zahneingriff. Das Verstellrad 10 ist ein Kegelrad, das sich in Richtung auf das Zentrum der Kugel verjüngt. Von dem Verstellrad 10 ragt in Bezug auf den Lagerkopf 6 nach radial außen eine Welle 11 ab, die drehsteif mit dem Verstellrad 10 verbunden ist und der Einleitung eines Drehmoments dient. Im Ausführungsbeispiel wird das Verstellrad 10 motorisch angetrieben, grundsätzlich könnte es jedoch auch mittels einer Handkurbel angetrieben werden, die an der Welle 11 angesetzt wird.

Die Blockiereinrichtung 20 blockiert den Zughaken 1 insbesondere gegen eine Schwenkbewegung um die Kupplungsquerachse R₁. Sie verhindert grundsätzlich aber auch Schwenkbewegungen um die beiden anderen Kupplungsachsen R₂ und R₃. Nach einem Lösen der Blockiereinrichtung 20 kann der Zughaken 1 aus der operativen Position in die inoperative Position bewegt werden. Die Blockiereinrichtung 20 umfasst zwei Blockierglieder 21, die in einem Eingriff mit einem gemeinsamen Antriebsglied 22 längs einer Achse S aufeinander zu und voneinander weg bewegbar sind. Das Antriebsglied 22 und die Blockierglieder 21 sind in dem Lagergehäuse 2 gelagert, das Antriebsglied 22 um die Achse S drehbeweglich und die Blockierglieder 21 längs der Achse S verdrehgesichert linear beweglich. Das Antriebsglied 22 ist eine um die Achse S drehgelagerte Spindel mit zwei axial nebeneinander angeordneten Gewindeabschnitten. Den einen Gewindeabschnitt bildet ein Linksgewinde und den anderen Gewindeabschnitt ein Rechtsgewinde. Das eine der Blockierglieder 21 ist mit dem Linksgewinde und das andere mit dem Rechtsgewinde im Gewindeeingriff. Ein Drehantrieb des Antriebsglieds 22 bewirkt somit in Abhängigkeit von der Drehrichtung des Antriebsglieds 22 die Bewegung der Blockierglieder 21 aufeinander zu in den Blockiereingriff oder voneinander weg aus dem Blockiereingriff. Die Blockierglieder 21 weisen je eine dem Lagerkopf 6 zugewandte Kontaktfläche auf, mit der sie im Blockiereingriff in einem flächigen Kontakt mit dem Lagerkopf 6 sind. Die Blockierglieder 21 verbreitern sich in Bezug auf die Achse S im Bereich ihrer jeweiligen Kontaktfläche zu ihren voneinander abgewandten Stirnseiten hin in die radiale Richtung, d.h. sie verdicken sich, im Ausführungsbeispiel konisch gerade. An ihrer von dem Lagerkopf 6 abgewandten Seite weisen die Blockierglieder 21 jeweils Führungsflächen für die verdrehgesicherte Linearführung durch das Lagergehäuse 2 auf.

Figur 4 zeigt den Zughaken noch immer in der operativen Position. Die Blockierglieder 21 befinden sich jedoch nicht mehr in dem Blockiereingriff. Entsprechend ist ein Blockiergegenelement 23 zu erkennen, das von einer an der äußeren Umfangsfläche des Lagerkopfs 6 geformten Vertiefung gebildet wird, die sich längs der Bewegungsachse S der Blockiereinrichtung 20 erstreckt. Das Blockiergegenelement 23 ist an die Form der beiden Kontaktflächen der Blockierglieder 21 angepasst, im Ausführungsbeispiel anschmiegend, geformt. Das Blockiergegenelement 23 weist dementsprechend zwei, in Bezug auf die Achse S in Richtung auf die beiden Stirnseiten sich erweiternde Abschnitte auf, die die Kontaktgegenflächen für die Kontaktflächen der Blockierglieder 21 bilden. Die Form der Kontaktflächen der Blockierglieder 21 und der Kontaktgegenflächen des Blockiergegenglieds 23 gewährleistet im Blockiereingriff eine satte Anlage der Blockierglieder 21 an dem jeweils zugeordneten Abschnitt des Blockiergegenelements 23 und somit an dem Lagerkopf 6. Durch die Formung des Blockiergegenelements 23 an der äußeren Umfangsfläche des Lagerkopfs 6 wird ein ausreichend großer Hebel für die Blockierung des Zughakens 1 erhalten. Die aufeinander zu und gegen den Lagerkopf 6, d.h. gegen den jeweils zugeordneten Abschnitt des Blockiergegenelements 23 drückenden Blockierglieder 21 sorgen im Blockiereingriff nicht nur für einen sicheren Formschluss, sondern auch für einen Kraftschluss, der Relativbewegungen zwischen dem Zughaken 1 und den Blockiergliedern 21 verhindert. Bewegungen relativ zum Lagergehäuse 2 sind nur noch im Lagerspiel des Antriebsglieds 22 möglich. Im Blockiereingriff werden somit das Verstellrad 10 und die Kurvenbahn 9 von den auf den Zughaken 1 wirkenden Kräften entkoppelt.

Um zu verhindern, dass der Zughaken 1 unter seinem eigenen Gewicht nach einem Lösen des Blockiereingriffs nach unten schwenkt, wird der Zughaken 1 in der operativen Position mittels eines Rastglieds 14 in einem lösbaren Rasteingriff gehalten. Das Rastglied 14 ist an dem Lagergehäuse 2 befestigt und weist ein längs der Kupplungshochachse R₂ axial bewegliches Rastelement, beispielsweise eine Kugel, und eine Feder, beispielsweise eine mechanische Druckfeder, auf. Die Feder beaufschlagt das Rastelement in Richtung auf ein Rastgegenelement, beispielsweise eine Rastvertiefung, des Lagerkopfs 6. Die Haltekraft des Rasteingriffs ist so groß, dass sie bei gelöstem Blockiereingriff verhindert, dass der Zughaken 1 aufgrund der Schwerkraft um die Kupplungsachse R₁ abschwenken kann.

Andererseits ist die Haltekraft jedoch so klein, dass sie durch einen Drehantrieb des Verstellrads 10, unterstützt von der Schwerkraft, überwunden wird.

Da die Verstellradachse mit der Kupplungsquerachse R₁ fluchtet, können der Zughaken 1 und das Verstellrad 10 bei gelöstem Blockiereingriff um die Kupplungsachse R₁ eine gemeinsame Rotationsbewegung ausführen. Wird das Verstellrad 10 um die Verstellradachse R₁ drehangetrieben, in der Sicht der Figur 3 gegen den Uhrzeigersinn, nimmt es den Zughaken 1 im Verstelleingriff mit, so dass der Zughaken 1 nach unten abgeschwenkt wird. Während dieser Schwenkbewegung findet zwischen dem Verstellrad 10 und dem Zughaken 1 keine oder nahezu keine Relativbewegung statt.

Das Rastglied 14 führt den Lagerkopf 6 bei dessen Rotationsbewegung um die Kupplungsquerachse R₁ in einem Führungseingriff. Für den Führungseingriff weist der Lagerkopf 6 an seinem äußeren Umfang eine in Umfangsrichtung um die Kupplungsquerachse R₁ erstreckte Führungsnut 15 auf, in die das Rastglied 14 hinein ragt. Die Führungsnut 15 verhindert im Führungseingriff mit dem Rastglied 14, dass der Lagerkopf 6 eine Rotationsbewegung in Bezug auf eine der beiden anderen Kupplungsachsen R₂ und R₃ ausführen kann. Ferner bildet der Lagerkopf 6 an einem Stirnende der Führungsnut 15 einen Anschlag 15a für das Rastglied 14. Sobald der Anschlag 15a in Anschlagkontakt mit einem Führungs- und Befestigungsteil des Rastglieds 14 gelangt, ist die Schwenkbewegung um die Kupplungsachse R₁ beendet. Das Führungs- und Befestigungsteil des Rastglieds 14 ist relativ zu dem Lagergehäuse 2 ortsfest. Für den Führungseingriff könnte alternativ, ob gleich weniger bevorzugt, von dem Lagerkopf 6 ein Vorsprung abragen und in eine im Lagergehäuse 2 gebildete Führungsnut eingreifen. Im allgemeinen Fall sind somit das Lagergehäuse 6 mit einem relativ zu dem Lagergehäuse 6 ortsfesten Führungsglied und der Lagerkopf 6 mit einem relativ zu dem Lagerkopf 6 ortsfesten Führungsgegenglied versehen, um den Zughaken 1 bei der Rotationsbewegung um die Kupplungsquerachse R₁ zu führen und das Stellrad 10 und die Kurvenbahn 9 im Verstelleingriff von Querkräften zu entlasten. Ein derartiger Führungseingriff kann anstelle des Führungseingriffs um die Kupplungsquerachse R₁ auch für die Rotationsbewegung um eine der beiden anderen Kupplungsachsen R₂ und R₃ vorgesehen sein. Gegebenenfalls kann ein derartiger Führungseingriff auch in Bezug auf mehrere der Kupplungsachsen R₁, R₂ und R₃ vorgesehen sein. Schließlich muss die Funktion des Führens nicht mit der Funktion des Fixierens mittels Rasteingriff kombiniert sein, sondern kann von einem reinen Führungs- und Anschlagglied erfüllt werden, das zusätzlich zu dem Rastglied 14 oder statt des Rastglieds 14 vorgesehen sein kann. So kann bei Verzicht auf die Rastfunktion das Rastglied 14 ein reines Führungs- und Anschlagglied und ferner vorzugsweise eine der Kupplungsachsen, beispielsweise wie im Ausführungsbeispiel die Kupplungshochachse R₂, bilden.

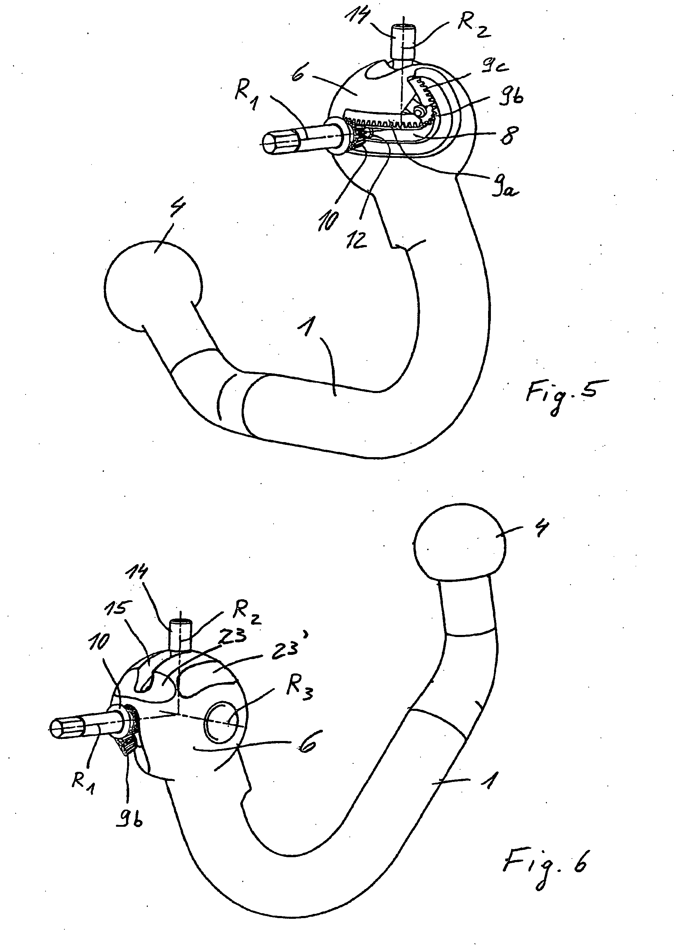

Figur 5 zeigt den Zughaken 1 nach dem Abschwenken in der Zwischenposition. Bei einem weiteren Drehantrieb des Verstellrads 10 im gleichen Drehsinn wie bei der Schwenkbewegung um die Kupplungsquerachse R₁ wälzt das Verstellrad 10 im Verstelleingriff an der Kurvenbahn 9 ab, so dass der Zughaken 1 entsprechend dem Bahnverlauf der Kurvenbahn 9 geschwenkt wird.

Die Verstellradachse R₁ weist während des Abwälzens stets radial in das Zentrum des Lagerkopfs 6. Das Stellrad 10 bewegt sich vom Lagerkopf 6 aus gesehen daher auf einem Meridian um die Kupplungshochachse R₂, d.h. die relativ zum Lagergehäuse 2 ortsfeste Verstellradachse R₁ bewegt sich auf dem Meridian. Die Kurvenbahn 9 weist entsprechend einen Bahnzweig 9a auf, der äquidistant zu dem Meridian verläuft, wobei der Abstand zwischen dem Meridian und dem Bahnzweig 9a sich aus dem Radius des Wälzkreises des Verstellrads 10 ergibt. Der Bahnzweig 9a erstreckt sich über einen dem Schwenkwinkel der Einschwenkbewegung entsprechenden Winkelbereich, im Ausführungsbeispiel über etwa 90° um die Kupplungshochachse R₂. Der Zughaken 1 schwenkt bei dieser Einschwenkbewegung um das im Anschlagkontakt mit dem Lagerkopf 6 befindliche Rastglied 14. Das Rastglied 14 bestimmt somit die Kupplungsachse R₂.

Um den Zughaken 1 aus der eingeschwenkten, aber noch abgesenkten Position nach oben in die inoperative Position schwenken zu können, schließt sich an den Bahnzweig 9a ein weiterer Bahnzweig 9c an, der ebenfalls an der äußeren Umfangsfläche des Lagerkopfs 6 angeordnet ist und der kugelförmigen Lagerfläche folgend um die Kupplungsquerachse R₁ gekrümmt ist. Der Bahnzweig 9c verläuft äquidistant zu einem Meridian des Lagerkopfs 6 um die Kupplungsachse R₁, den das Verstellrad 10 bzw. die Verstellradachse R₁bei dem Hochschwenken des Zughakens 1 relativ zu dem Lagerkopf 6 abfährt. Die Bahnzweige 9a und 9c weisen auf der Kugeloberfläche in einem rechten Winkel zueinander. Um einen kontinuierlich gekrümmten Übergang zu erhalten, wird der Kreuzungsbereich mit einem Übergangszweig 9b überbrückt. Die Bahnzweige 9a, 9b und 9c werden von separaten Bahnsegmenten gebildet, die in der Ausnehmung 7 längs der Kurvenbahn 9 nebeneinander angeordnet sind. Die Segmente könnten durch ein einziges, sich über die Gesamtlänge der Kurvenbahn 9 erstreckendes Kurvensegment ersetzt werden. In noch einer Alternative könnte die Kurvenbahn 9 im Lagerkopf 6 sozusagen aus dem Vollen gefräst sein.

Figur 6 zeigt den Zughaken 1 in der inoperativen Position. Für eine Blockierung in der inoperativen Position weist der Lagerkopf 6 an seiner äußeren Umfangsfläche ein weiteres Blockiergegenelement 23' auf, das der Form nach dem Fixiergegenelement 23 entspricht, gegenüber diesem jedoch entsprechend dem Schwenkwinkel der Einschwenkbewegung um die Kupplungsachse R₂ versetzt angeordnet ist, so dass die gleichen Blockierglieder 21 in der inoperativen Position in den Blockiereingriff mit dem Blockiergegenelement 23' und somit mit dem Lagerkopf 6 bewegt werden können.

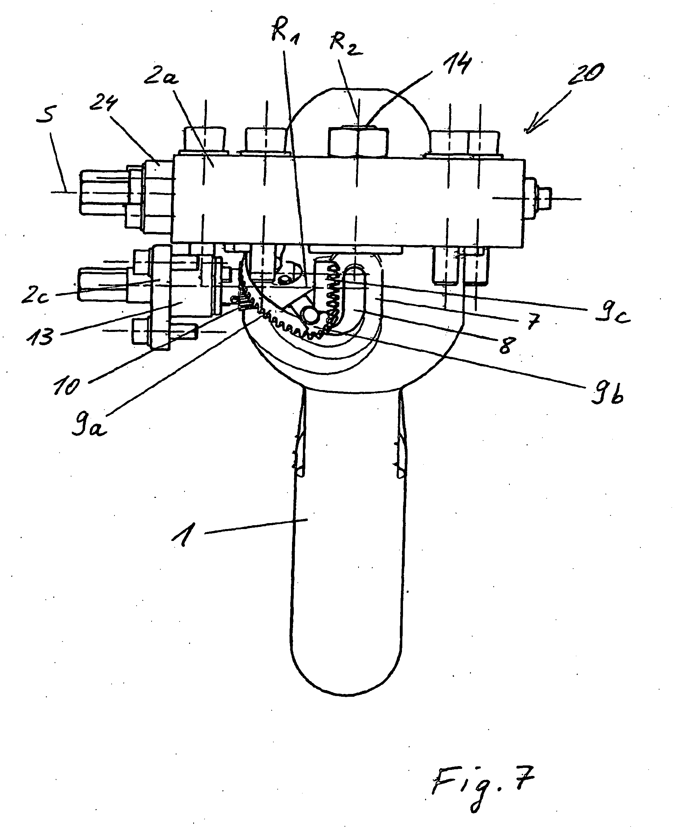

Figur 7 zeigt den in der operativen Funktion befindlichen Zughaken 1 und das Oberteil 2a des Lagergehäuses 2 von einer Rückseite, d.h. von der Befestigungseinrichtung 3 aus gesehen. In dem Oberteil 2a sind die Blockierglieder 21 und das Antriebsglied 22 gelagert. Seitlich ist ein Elektromotor 24 am Oberteil 2a befestigt, der direkt oder über eine Untersetzung das Antriebsglied 22 antreibt. Desweiteren ist ein Motor 13 erkennbar, der das Verstellrad 10 antreibt. Der Motor 13 ist an einem der Träger 2c befestigt und treibt das Verstellrad 10 entweder unmittelbar an, falls das Verstellrad 10 drehsteif mit dem Rotor des Motors 13 verbunden ist, oder vorzugsweise über ein Untersetzungsgetriebe. Das Untersetzungsgetriebe, vorzugsweise ein Planetengetriebe, kann selbsthemmend sein.
Die Kraft der Selbsthemmung kann bewusst durch entsprechende Auslegung des Untersetzungsgetriebes so groß gewählt werden, dass der Zughaken 1 durch das selbsthemmende Untersetzungsgetriebe nach dem Lösen des Blockiereingriffs der Blockiereinrichtung 20 noch in der operativen Position gehalten und erst bei einsetzendem Drehantrieb des Verstellrads 10 abgeschwenkt wird. Bei Verwendung eines selbsthemmenden Untersetzungsgetriebes kann auf den Rasteingriff des Rastglieds 14 verzichtet werden. Allerdings muss in diesem Falle das vom Gewicht des Zughakens 1 herrührende Drehmoment im Verstelleingriff des Verstellrads 10 und der Kurvenbahn 9 aufgenommen werden.

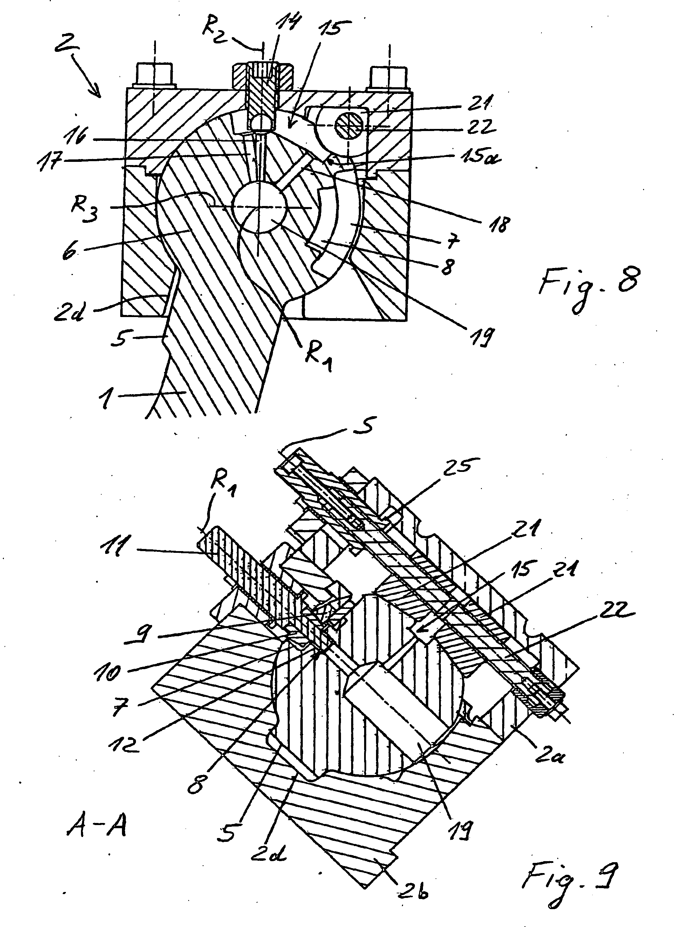

Figur 8 zeigt den Lagerbereich des Zughakens 1 in einem Längsschnitt in der R₂/R₃-Schnittebene. Zu erkennen ist insbesondere der Rasteingriff zwischen dem Rastglied 14 und dem Zughaken 1. Das Rastglied 14 umfasst wie bereits erwähnt ein Führungs- und Befestigungsteil, das längs der Kupplungshochachse R₂ durch das Gehäuse 2, im Ausführungsbeispiel durch das Oberteil 2a, ragt und mit diesem unbeweglich verbunden ist. In einem Hohlquerschnitt des Führungs- und Befestigungsteils sind das bereits genannte Rastelement und die Feder angeordnet. Das Rastelement, beispielsweise eine Kugel, wird von der Feder in den Rasteingriff mit einem Rastgegenelement 16, im Ausführungsbeispiel einer Rastvertiefung des Lagerkopfs 6, gedrückt, wodurch der gegen die Kraft der Feder lösbare Rasteingriff hergestellt ist. Das Rastgegenelement 16 wird von einer Bohrung gebildet, die im Grund der Führungsnut 15 mündet und sich von dem die Rastvertiefung bildenden Mündungsbereich nach radial einwärts bis in einen zentralen Kanal 19 erstreckt. Im Grund der Führungsnut 15 ist ein weiteres Rastgegenelement 17 in gleicher Weise mittels einer weiteren radialen Bohrung geformt, die ebenfalls bis in den Kanal 19 reicht. Das Rastgegenelement 17 gelangt mit dem Rastglied 14 in einen ebensolchen Rasteingriff, wenn der Zughaken 1 die inoperative Position erreicht hat.

Die Führungsnut 15 erstreckt sich um die Kupplungsquerachse R₁ über einen Winkelbereich, der dem Schwenkwinkel beim Hochschwenken in die inoperative Position entspricht. Der Lagerkopf 6 bildet an einer der beiden Stirnseiten der Führungsnut 15 den bereits erwähnten Anschlag 15a, der die Abschwenkbewegung des Zughakens 1 aus der operativen oder der inoperativen Position in die Zwischenposition durch Anschlagkontakt mit dem Rastglied 14 begrenzt. In einem in Bezug auf die Abschwenkbewegung geringen Abstand vor dem Anschlag 15a mündet eine weitere Bohrung 18 in der Führungsnut 15 in deren Grund. Die weitere Bohrung 18 erstreckt sich ebenfalls bis in den zentralen Kanal 19 und dient wie bereits die beiden die Rastgegenelemente 16 und 17 bildenden Bohrungen der Abführung von Abrieb aus dem Bereich des Rast- und Führungseingriffs.

Figur 9 zeigt den Lagerbereich des Zughakens 1 in dem Schnitt A-A der Figur 2. In diesem Schnitt ist unter anderem auch die in der operativen Position des Zughakens 1 ebenfalls in einem Blockiereingriff befindliche weitere Blockiereinrichtung erkennbar, die von dem Vorsprung 5 des Zughakens 1 und einer Ausnehmung 2d im Lagergehäuse 2 gebildet wird. Dieser weitere Blockiereingriff wird bei dem Hochschwenken des Zughakens 1 aus der Zwischenposition in die operative Position hergestellt, indem der Zughaken 1 mit seinem Vorsprung 5 von unten in die Ausnehmung 2d einfährt. Der Vorsprung 5 verjüngt sich in die Ausnehmung 2d hinein und die Ausnehmung 2d verbreitert sich zum Vorsprung 5 hin, so dass der Vorsprung 5 im Querschnitt trapezförmig und die Ausnehmung 2d angepasst prismatisch ist. Die Seitenflächen des Vorsprungs 5 sind in dem Blockiereingriff in einem flächigen Kontakt mit den Seitenflächen der Ausnehmung 2d. Die seitlichen Kontaktflächen des Vorsprungs 5 und der Ausnehmung 2d weisen zu der R₂/R₃-Ebene je einen Neigungswinkel, vorzugsweise einen konstanten Neigungswinkel auf. Durch die angepasste Verjüngung und Verbreiterung wird der Zughaken 1 gegen Rotationsbewegungen um die Kupplungshochachse R₂ spielfrei blockiert. Der Neigungswinkel ist vorteilhafterweise jedoch so groß, dass im Blockiereingriff des Vorsprungs 5 und der Ausnehmung 2d keine Selbsthemmung auftritt, die so groß ist, dass sie von dem Drehantrieb des Verstellrads 10 nicht überwunden werden kann. Eine geringe Selbsthemmung, die beispielsweise so groß sein kann, dass sie das Eigengewicht des Zughakens 1 kompensiert oder zu einem Teil kompensiert, ist jedoch durchaus vorteilhaft.

Unter dem Gesichtspunkt des spielfreien Blockiereingriffs von Vorsprung 5 und Ausnehmung 2d ist ferner vorteilhaft, dass die Blockiereinrichtung 20 so angeordnet ist, dass die von ihr im Blockiereingriff auf den Lagerkopf 6 ausgeübte Kraft den Vorsprung 5 in den Blockiereingriff mit der Ausnehmung 2d und somit dem Lagergehäuse 2 drückt. Die Position der Blockiereinrichtung 20 sollte relativ zu der Ausnehmung 2d allerdings so gewählt werden, dass die von der Blockiereinrichtung 20 ausgeübte Kraft in dem Blockiereingriff des Vorsprungs 5 und der Ausnehmung 2d keine Hemmkraft erzeugt, die von dem Drehantrieb des Verstellrads 10 nicht überwunden werden kann. Um eine übergroße Selbsthemmung zu verhindern, können auch der Neigungswinkel der Verjüngung des Vorsprungs 5 und der Verbreiterung der Ausnehmung 2d entsprechend gewählt werden. Der Neigungswinkel kann unter diesem Gesichtspunkt vorteilhafterweise zwischen 5° und 30° zur R₂/R₃-Ebene gewählt werden.

Figur 9 zeigt ferner weitere Details zum Verstellrad 10. Das Verstellrad 10 sitzt drehsteif auf der Verstellradwelle 11, die um die Verstellrad- und Kupplungsachse R₁ vom Lagergehäuse 2 drehbar gelagert wird. Das Verstellrad 10 ist ferner mit einem koaxial angeordneten Stützelement 12 verbunden, das in Bezug auf den Lagerkopf 6 radial einwärts von dem Verstellrad 10 angeordnet ist. Das Stützelement 12 ist relativ zu dem Verstellrad 10 um die Verstellradachse R₁ drehbar. Im Ausführungsbeispiel durchragt die Welle 11 das Verstellrad 10, und das Stützelement 12 ist eine um die Achse R₁ drehbar auf der Welle 11 angeordnete Buchse. Mittels des Stützelements 12 wird das Verstellrad 10 auch an der vom Motor 13 abgewandten Seite gestützt und somit von Querkräften entlastet. Das Stützelement 12 bewegt sich bei der Relativbewegung zwischen dem Lagerkopf 6 und dem Verstellrad 10 in einer Vertiefung, die eine Stützbahn 8 für das Verstellrad 10 bildet. Die Stützbahn 8 ist, wie auch in den Figuren 3, 5, 7 und 8 dargestellt, in der Vertiefung am Grund der Ausnehmung 7 des Lagerkopfs 6 geformt.

Das Antriebsglied 22 ist gemeinsam mit den beiden Fixiergliedern 21 relativ zu dem Lagergehäuse 2 axial schwimmend gelagert. Die Schwimmlagerung ist eine Gleitlagerung. Der im Rahmen der Schwimmlagerung mögliche axiale Hub wird mittels eines Anschlags 25 bestimmt, der relativ zu dem Antriebsglied 22 axial unbeweglich ist. Er ist desweiteren relativ zu dem Antriebsglied 22 auch nicht drehbeweglich, was allerdings für die Funktion der Schwimmlagerung nicht von Bedeutung ist. Der Anschlag 25 ragt in Bezug auf die Achse S nach radial außen in eine Ausnehmung im Lagergehäuse 2. Die Ausnehmung bildet in Bezug auf die axiale Bewegbarkeit des Antriebsglieds 22 einen linken und einen rechten Gegenanschlag für den Anschlag 25. In Umkehrung der Anordnung könnten eine solche Ausnehmung auch relativ zu dem Antriebsglied 22 axial unbeweglich angeordnet und ein in die Ausnehmung ragender Vorsprung axial unbeweglich am Lagergehäuse 2 vorgesehen sein. Im Zusammenwirken des Anschlags 25 mit den beiden Gegenanschlägen wird der axiale Hub auf wenige Millimeter, beispielsweise 4 bis 5 mm, beschränkt.

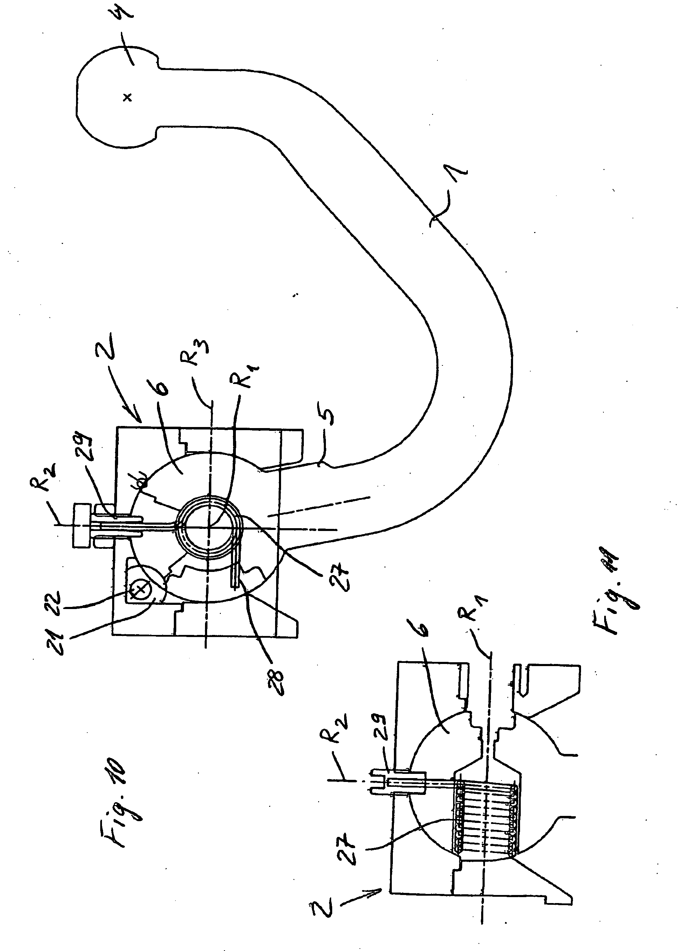

Figur 10 zeigt eine modifizierte Anhängerkupplung in einem Längsschnitt. Figur 11 zeigt nur den Lagerbereich in einem Querschnitt. In einem zentralen Bereich des Lagerkopfs 6 ist eine Entlastungsfeder 27 angeordnet und so abgestützt, dass sie auf den Zughaken 1 eine um die Kupplungsquerachse R₁ aufwärts gerichtete und somit der Schwerkraft entgegenwirkende Federkraft ausübt. Die Entlastungsfeder 27 ist eine mehrfach um die Kupplungsachse R₁ gewundene Schenkelfeder. Sie wird auf Torsion beansprucht. Von dem gewundenen Federbereich ragt an beiden axialen Enden der Entlastungsfeder 27 je ein Federschenkel quer zu der Kupplungsachse R₁ ab. Der eine der beiden Federschenkel ist am Zughaken 1, im Ausführungsbeispiel im Lagerkopf 6 abgestützt, wofür der Lagerkopf 6 einen Halter 28 bildet, in den der betreffende Federschenkel hineinragt. Über den anderen Federschenkel ist die Entlastungsfeder 27 an dem Lagergehäuse 2 abgestützt. Die Abstützung erfolgt mittels eines Halters 29 der mit dem Lagergehäuse 2 fest verbunden ist, und in den der betreffende Federschenkel hineinragt. Die Entlastungsfeder 27 ist in der dargestellten operativen Position des Zughakens 1 vorgespannt. Die Entlastungsfeder 27 unterstützt das Verstellrad 10 bei dem Hochschwenken in die operative und in die inoperative Position. Desweiteren entlastet sie das Rastglied 14 im Rasteingriff.

Die Federsteifigkeit und die Vorspannung der Entlastungsfeder 27 sind vorzugsweise so gewählt, dass die Entlastungsfeder 27 zumindest im Wesentlichen das vom Eigengewicht des Zughakens 1 um die Kupplungsquerachse R₁ wirkende Drehmoment kompensiert und der Zughaken 1 schwerelos oder fest schwerelos um die Kupplungsquerachse R₁ geschwenkt werden kann. Vorteilhaft ist aber auch bereits, wenn die Entlastungsfeder 27 nur einen Teil des von der Schwerkraft herrührenden Drehmoments kompensiert.

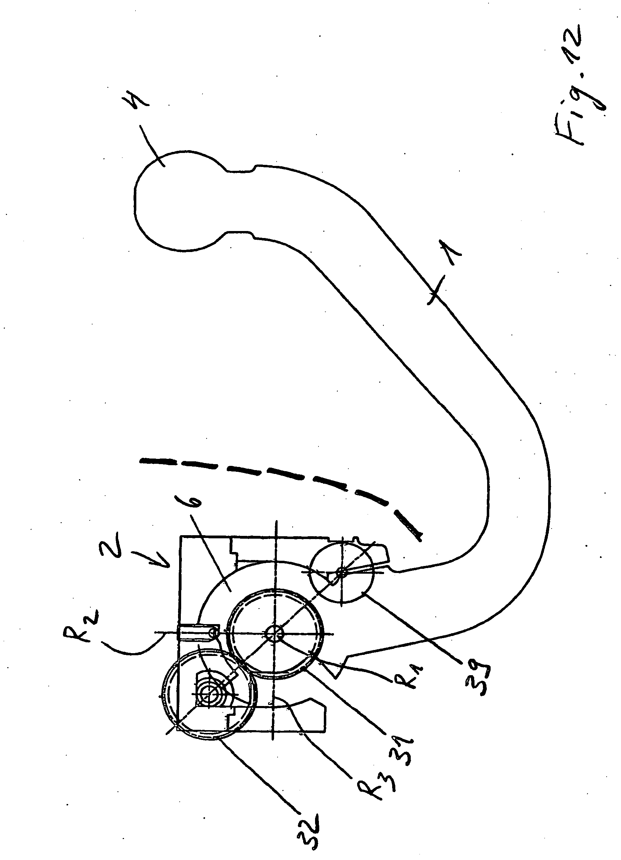

Figur 12 zeigt die Anhängerkupplung in einer zweiten Modifikation. In dieser Modifikation werden das Verstellrad 10 und das Antriebsglied 22 der Blockiereinrichtung 20 von einem einzigen, gemeinsamen Motor über einen Umsteuermechanismus angetrieben. Der Umsteuermechanismus umfasst zwei vom Motor angetriebene Zahnräder 31 und 32 und einen Schalter 39. In Figur 12 ist ferner in einer dicken, strichliierten Linie ein Stoßfänger eines Fahrzeugs, an dem die Anhängerkupplung montiert ist, angedeutet.

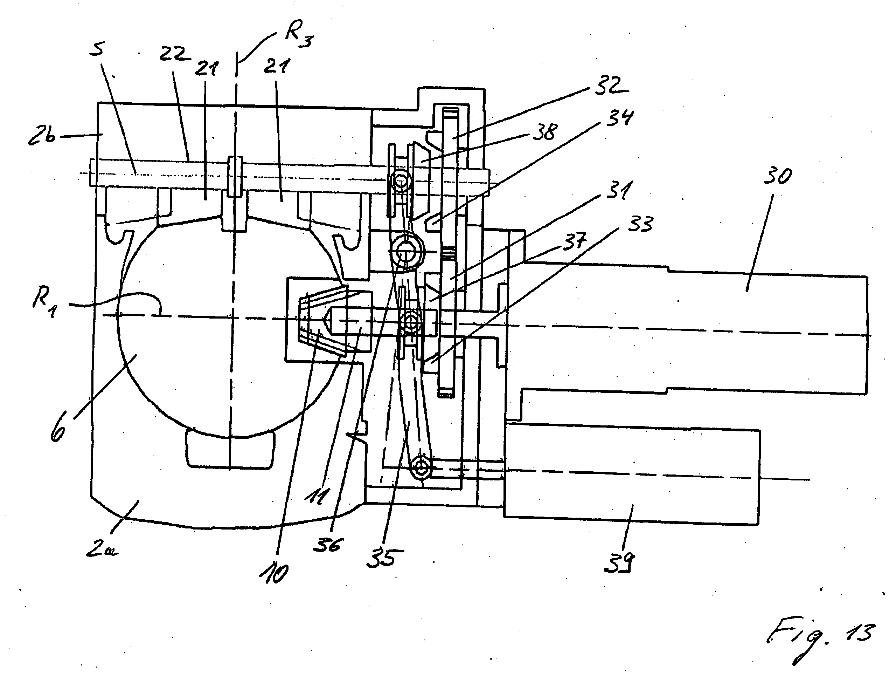

Figur 13 zeigt die Anhängerkupplung der Figur 12 in einer R₁/R₃-Schnittebene. Der gemeinsame Motor ist mit dem Bezugszeichen 30 versehen. Das Zahnrad 31 sitzt drehsteif auf einer Ausgangswelle des Motors 30 und kämmt mit dem Zahnrad 32. Die Ausgangswelle des Motors 30 ist koaxial zur Verstellrad- und Kupplungsquerachse R₁. Das Zahnrad 32 ist um die Achse S des Antriebsglieds 22 drehbar gelagert. Der Umsteuermechanismus umfasst ferner einen zweiarmigen Hebel 35, der in einem Drehgelenk 36 um eine zur R₁, R₃-Ebene senkrechte Drehachse drehbar ist. Diese Drehachse ist in der Sicht auf die R₁/R₃-Ebene zwischen dem Antriebsglied 22 und der Welle 11 des Verstellrads 10 angeordnet. Der eine der beiden Hebelarme des Hebels 36 erstreckt sich zum Antriebsglied 22 hin. Der andere Hebelarm erstreckt sich zur Verstellwelle 11 und über die Verstellwelle 11 hinaus bis zu einem Aktuator des Schalters 39. Mittels des Schalters 39 ist der Hebel 35 um seine Drehachse zwischen zwei Schaltstellungen hin und her beweglich.

Der Umsteuermechanismus umfasst ferner eine erste Drehkupplung für eine drehsteife Verbindung des Zahnrads 31 mit dem Verstellrad 10 und eine zweite Drehkupplung für eine drehsteife Verbindung des Zahnrads 32 mit dem Antriebsglied 22. Die erste Drehkupplung umfasst eine Kupplungshälfte 33, die drehsteif mit dem Zahnrad 31 verbunden ist, und eine Kupplungshälfte 37, die drehsteif mit dem Verstellrad 10, d.h. mit dessen Welle 11 verbunden, aber relativ zu dem Verstellrad 10 axial beweglich ist. Die zweite Kupplung umfasst eine drehsteif mit dem Zahnrad 32 verbundene Kupplungshälfte 34 und eine drehsteif mit dem Antriebsglied 22 verbundene Kupplungshälfte 38. Die Kupplungshälfte 38 ist relativ zu dem Antriebsglied 22 axial beweglich. Der Hebelarm ist mit den beiden Kupplungshälften 37 und 38 je in einem Drehgelenk verbunden, wobei die Drehachse des jeweiligen Drehgelenks senkrecht zu der R₁R₃-Ebene weist. Der Hebel 35 nimmt entsprechend den beiden Schaltzuständen des Schalters 39 eine von zwei Drehpositionen ein. In der einen Drehposition ist die Drehkupplung 33, 37 geschlossen und die Drehkupplung 34, 38 geöffnet. In der anderen der beiden Drehpositionen ist die Drehkupplung 34, 38 geschlossen und die Drehkupplung 33, 37 geöffnet, so dass im Wechsel der Motor 30 entweder mit dem Verstellrad 10 oder dem Antriebsglied 22 gekoppelt und von dem jeweils anderen entkoppelt ist.

Der Schalter 39, vorzugsweise ein elektromagnetischer Schalter, kann beispielsweise von einer Steuerung der Anhängerkupplung angesteuert und dadurch zwischen seinen beiden möglichen Schaltzuständen so umgesteuert werden, dass er für das Einfahren und das Ausfahren des Zughakens 1 in einer ersten Phase den Motor 30 über den Hebel 35 mit dem Antriebsglied 22 koppelt, bis der Blockiereingriff gelöst ist, und nach dem Lösen des Blockiereingriffs den Motor 30 von dem Antriebsglied 22 entkoppelt und stattdessen mit dem Verstellrad 10 koppelt, um die Ein- oder Ausfahrbewegung zu bewirken. Nach Erreichen der operativen oder der inoperativen Position wird der Schalter 39 erneut umgelegt, d.h. sein Aktuator fährt in die Position, in der das Antriebsglied 22 mit dem Motor 30 gekoppelt ist und die beiden Blockierglieder 21 wieder in den Blockiereingriff bewegt werden.

### Bezugszeichen:

- 1: Zughaken
- 2: Lagergehäuse
- 2a: Oberteil
- 2b: Unterteil
- 2c: Träger
- 2d: Ausnehmung
- 3: Befestigungseinrichtung
- 4: Hakenende
- 5: Vorsprung
- 6: Lagerkopf
- 7: Ausnehmung
- 8: Stützbahn
- 9: Kurvenbahn
- 10: Verstellrad
- 11: Verstellradwelle
- 12: Stützelement
- 13: Motor
- 14: Rastglied
- 15: Führungsnut
- 16: Rastgegenelement
- 17: Rastgegenelement
- 18: Bohrung
- 19: Kanal
- 20: Blockiereinrichtung
- 21: Blockierglied
- 22: Antriebsglied, Spindel
- 23: Blockiergegenelement
- 24: Motor
- 25: Anschlag
- 26: -
- 27: Feder
- 28: Halter
- 29: Halter
- 30: Motor
- 31: Zahnrad
- 32: Zahnrad
- 33: Kupplungshälfte
- 34: Kupplungshälfte
- 35: Hebel
- 36: Hebelgelenk
- 37: Kupplungshälfte
- 38: Kupplungshälfte
- 39: Schalter
- R₁: Kupplungachse, Verstellradachse
- R₂: Kupplungsachse
- R₃: Kupplungsachse
- X: Fahrzeuglängsachse
- Y: Fahrzeugquerachse
- Z: Fahrzeughochachse
- H: Hebeldrehachse
- S: Gewindeachse, Spindelachse

## Patentansprüche

1. Anhängerkupplung, umfassend:
a) eine an einem Fahrzeug montierte oder montierbare Lagerungseinrichtung (2, 3),
b) einen von der Lagerungseinrichtung (2, 3) abragenden Zughaken (1), den die Lagezungseinrichtung (2, 3) um winkelig zueinander weisende Kupplungsachsen (R₁, R₂, R₃) rotatorisch beweglich lagert, um den Zughaken (1) wahlweise in eine operative Position zum Anhängen eines Anhängers oder eine inoperative Position bewegen zu können,
c) und ein von der Lagerungseinrichtung (2, 3) um eine Verstellradachse (R₁) drehbar gelagertes Verstellrad (10), das bei einer Drehbewegung um die Verstellradachse (R₁) den Zughaken (1) um wenigstens eine der Kupplungsachsen (R₁, R₂, R₃) bewegt
**dadurch gekennzeichnet, dass**
d) eine Kurvenbahn (9) an dem Zughaken (1) vorgesehen
e) das Verstellrad (10) in einem Vezstelleingriff mit dem Zughaken (1) an der Kurvenbahn (9) abrollbar ist, und die Verstellradachse (10) wenigstens eine der Kupplungsachsen (R₁, R₂) schneidet.

2. Anhängerkupplung nach dem vorhergehenden Anspruch, **dadurch gekennzeichnet, dass** die wenigstens eine der Kupplungsachsen (R₁, R₂, R₃) im Verlaufe der Bewegung des Zughakens (1) mit der Verstellradachse (R₁) fluchtet und dass das Verstellrad (10) bei seiner Drehbewegung den Zughaken (1) mitnimmt und der Zughaken (1) bei der Mitnahme eine Rotationsbewegung um die Verstellradachse (R₁) ausführt.

3. Anhängerkupplung nach dem vorhergehenden Anspruch, **dadurch gekennzeichnet, dass** die Verstellradachse (R₁) bei an dem Fahrzeug montierter Lagerungseimichtung (2, 3) parallel zu einer X-Achse oder vorzugsweise Y-Achse des Fahrzeugs weist oder wenigstens eine zu der X- oder Y-Achse parallele Achskomponente hat, so dass das Verstellrad (10) den Zughaken (1) von der Schwerkraft unterstützt mitnimmt.

4. Anhängerkupplung nach einem der vorhergehenden Ansprüche, **dadurch gekennzeichnet, dass** die Kurvenbahn (9) einen um wenigstens eine der Kupplungsachsen (R₁, R₂, R₃) gekrümmten Zweig (9a) und vorzugsweise einen um eine andere der Kupplungsachsen (R₁, R₂, R₃) gekrümmten weiteren Zweig (9c) aufweist.

5. Anhängerkupplung nach einem der vorhergehenden Ansprüche, **dadurch gekennzeichnet, dass** das Verstellrad (10) ein Zahnrad und der Verstelleingriff ein Zahneingriff ist.

6. Anhängerkupplung nach einem der vorhergehenden Ansprüche, **dadurch gekennzeichnet, dass** das Verstellrad (10) ein Kegelrad ist.

7. Anhängerkuppitmg nach einem der vorhergehenden Ansprüche, **dadurch gekennzeichnet, dass** der Zughaken (1) einen Lagerkopf (6) aufweist, der mit einem Lagergehäuse (2) der Lagerungseinrichtung (2, 3) ein Gelenk bildet, in dem der Zughaken (1) um die Kupplungsachsen (R₁, R₂, R₃) rotatorisch beweglich ist, und dass die Kurvenbahn (9) einer Oberflächenkontur des Lagerkopfs (6) folgt und vorzugsweise an einem Umfang des Lagerkopfs (6) angeordnet ist.

8. Anhängerkupplung nach einem der vorhergehenden Ansprüche, **dadurch gekennzeichnet, dass** der Zughaken (1) einen sphärischen Lagerkopf (6) aufweist, der mit einem Lagergehäuse (2) der Lagerungseinrichtung (2, 3) ein Gelenk bildet, in dem der Zughaken
(1) um die Kupplungsachsen (R₁, R₂, R₃) rotatorisch beweglich ist, und dass die Kurvenbahn (9) um wenigstens eine der Kupplungsachsen (R₁, R₂, R₃) einen Teilkreis beschreibt, vorzugsweise wenigstens einem Meridian des Lagerkopfs (6) in einem geringen Abstand äquidistant folgend gekrümmt ist.

9. Anhängerkupplung nach einem der vorhergehenden Ansprüche, **dadurch gekennzeichnet, dass** der Zughaken (1) mittels eines Rastglieds (14) in der operativen Position oder der inoperativen Position gehalten wird, und ein in der operativen Position oder inoperativen Position bestehender Rasteingriff des Rastglieds (14) und vorzugsweise des Zughakens (1) mittels einer von dem Verstellrad (10) im Verstelleingriff auf den Zughaken (1) ausgeübten Kraft lösbar ist.

10. Anhängerkupplung nach einem der vorhergehenden Ansprüche, **dadurch gekennzeichnet, dass** ein Führungsglied (14), vorzugsweise das Rastglied (14) nach dem vorhergehenden Anspruch, den Zughaken (1) bei der Bewegung um eine der Kupplungsachsen (R₁, R₂, R₃) führt.

11. Anhängerkupplung nach einem der vorhergehenden Ansprüche, **dadurch gekennzeichnet, dass** wenigstens ein Anschlagglied (10, 14) vorgesehen und der Zughaken (1) in dem Verstelleingriff um wenigstens eine der Kupplungsachsen (R₁, R₂, R₃) in Anschlagkontakt gegen das Anschlagglied (10, 14) bewegbar ist und dass das Anschlagglied (10, 14) im Anschlagkontakt eine andere der Kupplungsachsen (R₁, R₂, R₃) bildet, wobei vorzugsweise das Rastglied (14) nach einem der zwei vorhergehenden Ansprüche oder das Verstellrad (10) das Anschlagglied (10, 14) bildet.

12. Anhängerkupplung nach einem der vorhergehenden Ansprüche, **dadurch gekennzeichnet, dass** eine Blockiereinrichtung (20) mit wenigstens einem von der Lagerungseinrichtung (2, 3) beweglich gelagerten Blockierglied (21) vorgesehen und das Blockierglied (21) relativ zu dem Verstellrad (10) in einen kraft- oder vorzugsweise formschlüssigen Blockiereingriff mit dem Zughaken (1) bewegbar ist, in dem es den Zughaken (1) in der operativen Position oder der inoperativen Position blockiert.

13. Anhängerkupplung nach dem vorhergehenden Anspruch, **dadurch gekennzeichnet, dass** ein der Form nach an das Blockierglied (21) angepasstes Blockiergegenelement (23, 23') eine Außenfläche des Zughakens (1) ist und der Blockiereingriff durch Kontakt des Blockierglieds (21) und des Blockiergegenelements (23,23') hergestellt wird.

14. Anhängerkupplung nach einem der zwei vorhergehenden Ansprüche, **dadurch gekennzeichnet, dass** die Lagerungseinrichtung (2, 3) das Blockierglied (21) translatorisch bewegbar lagert, vorzugsweise linear führt.

15. Anhängerkupplung nach einem der drei vorhergehenden Ansprüche, **dadurch gekennzeichnet, dass** die Blockiereinrichtung (20) ein von der Lagerungseinrichtung (2, 3) drehbar gelagertes Antriebsglied (22) umfasst, vorzugsweise Spindel (22), das mit dem Blockierglied (21) in einem Gewindeeingriff ist, und dass die Lagerungseinrichtung (2, 3) das Blockierglied (21) in Bezug auf die Gewindeachse (S) verdrehgesichert führt.

16. Anhängerkupplung nach einem der vier vorhergehenden Ansprüche, **dadurch gekennzeichnet, dass** das Blockierglied (21) sich in eine Richtung, in die es in den Blockiereingriff bewegbar ist, verjüngt, vorzugsweise konisch.

17. Anhängerkupplung nach einem der fünf vorhergehenden Ansprüche, **dadurch gekennzeichnet, dass** die Blockiereinrichtung (20) ein weiteres solches Blockierglied (21) umfasst und die Blockierglieder (21) aufeinander zu in den Blockiereingriff bewegbar sind.

18. Anhängerkupplung nach dem vorhergehenden Anspruch, **dadurch gekennzeichnet, dass** die Blockierglieder (21) parallel zu einer Richtung, in die sie in den Blockiereingriff bewegbar sind, schwimmend gelagert sind.

19. Anhängerkupplung nach einem der sieben vorhergehenden Ansprüche, **dadurch gekennzeichnet, dass** für das Verstellrad (10) und die Blockiereinrichtung (20) je ein eigener Motor (13, 24) vorgesehen ist

20. Anhängerkupplung nach einem der Ansprüche 12 bis 18, **dadurch gekennzeichnet, dass** für das Verstellrad (10) und die Blockiereinrichtung (20) ein gemeinsamer Motor (30) und ein Umsteuermechanismus (31-39) vorgesehen sind und dass der Umsteuermechanismus (31-39) den Motor (30) in einem ersten Zustand mechanisch mit dem Verstellrad (10) und in einem zweiten Zustand mit dem Blockierglied (21) koppelt, wobei der Umsteuermechanismus (31-39) vorzugsweise nur zwischen diesen beiden Zuständen umsteuert.

21. Anhängerkupplung nach dem vorhergehenden Anspruch, **dadurch gekennzeichnet, dass** die Blockiereinrichtung (20) ein Antriebsglied (22) umfasst, das drehbar gelagert und mit dem Blockierglied (21) so gekoppelt ist, dass das Blockierglied (21) durch eine Drehbewegung des Antriebsglieds (22) in und aus dem Blockiereingriff bewegbar ist, dass der Motor (30) eine erste Welle und eine zweite Welle antreibt und dass der Umsteuermechanismus (31-39) wahlweise die erste Welle mit dem Verstellrad (10) oder die zweite Welle mit dem Antriebsglied (22) koppelt.

22. Anhängerkupplung nach dem vorhergehenden Anspruch, **dadurch gekennzeichnet, dass** der Umsteuermechanismus (31-39) eine erste Drehkupplung (33, 37) für das Verstellrad (10), eine zweite Drehkupplung (34, 38) für das Antriebsglied (22) und einen hin und her schwenkbaren Hebel (35) mit einem ersten Hebelarm und einem zweiten Hebelarm aufweist, dass eine Kupplungshälfte (37) der ersten Drehkupplung an dem ersten Hebelarm und eine Kupplungshälfte (38) der zweiten Drehkupplung an dem zweiten Hebelarm angeordnet ist und dass durch eine Schwenkbewegung des Hebels eine der Drehkupplungen geöffnet und die jeweils andere geschlossen wird.

23. Anhängerkupplung nach einem der vorhergehenden Ansprüche, **dadurch gekennzeichnet, dass** eine Feder (27) dem Gewicht des Zughakens (1) entgegen wirkend angeordnet ist.

24. Anhängerkupplung nach dem vorhergehenden Anspruch in Kombination mit Anspruch 7 oder 8, **dadurch gekennzeichnet, dass** die Feder (27) eine in dem Lagerkopf angeordnete Schenkelfeder ist und sich mit einem Federschenkel an dem Zughaken (1) und einem anderen Federschenkel an der Lagerungseinrichtung (2, 3) abstützt

## Claims

1. A trailer coupling, comprising:
a) a mounting device (2, 3) which is or can be fitted to a vehicle;
b) a tow hook (1) which projects from the mounting device (2, 3) and is mounted by the mounting device (2, 3) such that it can be rotationally moved about coupling axes (R₁, R₂, R₃) which point at an angle to each other, in order to be able to selectively move the tow hook (1) into an operative position for attaching a trailer or into an inoperative position;
c) and an adjusting wheel (10) which is mounted by the mounting device (2, 3) such that it can be rotated about an adjusting wheel axis (R₁), and which moves the tow hook (1) about at least one of the coupling axes (R₁, R₂, R₃) during a rotational movement about the adjusting wheel axis (R₁);
**characterised in that**:
d) a cam track (9) is provided on the tow hook (1);
e) the adjusting wheel (10) can be rolled off on the cam track (9) in an adjusting engagement with the tow hook (1), and the adjusting wheel axis (R₁) intersects at least one of the coupling axes (R₂, R₃),

2. The trailer coupling according to the preceding claim, **characterised in that** the at least one of the coupling axes (R₁, R₂, R₃) is flush with the adjusting wheel axis (R₁) in the course of the movement of the tow hook (1), and **in that** the adjusting wheel (10) slaves the tow hook (1) during its rotational movement, and the tow hook (1), when slaved, performs a rotational movement about the adjusting wheel axis (R₁).

3. The trailer coupling according to the preceding claim, **characterised in that** when the mounting device (2, 3) is fitted to the vehicle, the adjusting wheel axis (R₁) points parallel to an X axis or preferably Y axis of the vehicle, or at least has an axial component parallel to the X or Y axis, such that the adjusting wheel (10) slaves the tow hook (1) with the assistance of gravity.

4. The trailer coupling according to any one of the preceding claims, **characterised in that** the cam track (9) comprises one arm (9a) which is curved about at least one of the coupling axes (R₁, R₂, R₃), and preferably another arm (9c) which is curved about another of the coupling axes (R₁, R₂, R₃),

5. The trailer coupling according to any one of the preceding claims, **characterised in that** the adjusting wheel (10) is a toothed wheel and the adjusting engagement is a toothed engagement.

6. The trailer coupling according to any one of the preceding claims, **characterised in that** the adjusting wheel (10) is a bevel wheel.

7. The trailer coupling according to any one of the preceding claims, **characterised in that** the tow hook (1) comprises a bearing head (6) which together with a bearing casing (2) of the mounting device (2, 3) forms a joint, in which the tow hook (1) can be rotationally moved about the coupling axes (R₁, R₂, R₃), and **in that** the cam track (9) follows a surface contour of the bearing head (6) and is preferably arranged on a circumference of the bearing head (6).

8. The trailer coupling according to any one of the preceding claims, **characterised in that** the tow hook (1) comprises a spherical bearing head (6) which together with a bearing casing (2) of the mounting device (2, 3) forms a joint, in which the tow hook (1) can be rotationally moved about the coupling axes (R₁, R₂, R₃), and **in that** the cam track (9) describes a reference circle about at least one of the coupling axes (R₁, R₂, R₃) and is preferably curved such that it equidistantly follows at least one meridian of the bearing head (6) at a small distance.

9. The trailer coupling according to any one of the preceding claims, **characterised in that** the tow hook (1) is held in the operative or the inoperative position by means of a locking member (14), and a locking engagement of the locking member (14) and preferably of the tow hook (1) which exists in the operative position or inoperative position can be released by means of a force which is exerted on the tow hook (1) by the adjusting wheel (10) in the adjusting engagement.

10. The trailer coupling according to any one of the preceding claims, **characterised in that** a guiding member (14), preferably the locking member (14) according to the preceding claim, guides the tow hook (1) during the movement about one of the coupling axes (R₁, R₂, R₃).

11. The trailer coupling according to any one of the preceding claims, **characterised in that** at least one abutting member (10, 14) is provided, and that in the adjusting engagement, the tow hook (1) can be moved about at least one of the coupling axes (R₁, R₂, R₃), into abutting contact against the abutting member (10, 14), and **in that** in the abutting contact, the abutting member (10, 14) forms another of the coupling axes (R₁, R₂, R₃), wherein the locking member (14) according to any one of the preceding two claims or the adjusting wheel (10) preferably forms the abutting member (10, 14).

12. The trailer coupling according to any one of the preceding claims, **characterised in that** a blocking device (20) is provided, comprising at least one blocking member (21) which is mounted by the mounting device (2, 3) such that it can be moved, and that the blocking member (21) can be moved relative to the adjusting wheel (10) into a force-fit or preferably positive-fit blocking engagement with the tow hook (1), in which it blocks the tow hook (1) in the operative position or the inoperative position.

13. The trailer coupling according to the preceding claim, **characterised in that** a blocking counter element (23, 23') which is adapted in terms of its shape to the blocking member (21) is an outer area of the tow hook (1), and the blocking engagement is established by contact between the blocking member (21) and the blocking counter element (23, 23').

14. The trailer coupling according to any one of the preceding two claims, **characterised In that** the mounting device (2, 3) mounts the blocking member (21) such that it can be moved translationally, and preferably linearly guides it.

15. The trailer coupling according to any one of the preceding three claims, **characterised in that** the blocking device (20) comprises a drive member (22), preferably a spindle (22), which is mounted by the mounting device (2, 3) such that it can be rotated and which is in a threaded engagement with the blocking member (21), and **in that** the mounting device (2, 3) guides the blocking member (21), secured against rotating, in relation to the threaded axis (S).

16. The trailer coupling according to any one of the preceding four claims, **characterised In that** the blocking member (21) tapers, preferably conically, in a direction in which it can be moved into the blocking engagement

17. The trailer coupling according to any one of the preceding five claims, **characterised in that** the blocking device (20) comprises another such blocking member (21), and the blocking members (21) can be moved towards each other into the blocking engagement.

18. The trailer coupling according to the preceding claim, **characterised in that** the blocking members (21) are floatingly mounted parallel to a direction in which they can be moved into the blocking engagement.

19. The trailer coupling according to any one of the preceding seven claims, **characterised in that** a separate motor (13, 24) is provided for each of the adjusting wheel (10) and the blocking device (20).

20. The trailer coupling according to any one of claims 12 to 18, **characterised in that** a common motor (30) and a switching mechanism (31-39) are provided for the adjusting wheel (10) and the blocking device (20), and **in that** the switching mechanism (31-39) mechanically couples the motor (30) to the adjusting wheel (10) in a first state, and mechanically couples the motor (30) to the blocking member (21) in a second state, wherein the switching mechanism (31-39) preferably only switches between these two states.

21. The trailer coupling according to the preceding claim, **characterised in that** the blocking device (20) comprises a drive member (22) which is mounted such that it can be rotated and which is coupled to the blocking member (21) such that the blocking member (21) can be moved into and out of the blocking engagement by a rotational movement of the drive member (22), **in that** the motor (30) drives a first shaft and a second shaft, and **in that** the switching mechanism (31-39) selectively couples the first shaft to the adjusting wheel (10) or the second shaft to the drive member (22).

22. The trailer coupling according to the preceding claim, **characterised In that** the switching mechanism (31-39) comprises a first rotational coupling (33, 37) for the adjusting wheel (10), a second rotational coupling (34, 38) for the drive member (22), and a lever (35) which can be pivoted back and forth and comprises a first lever arm and a second lever arm, **in that** one coupling half (37) of the first rotational coupling is arranged on the first lever arm and one coupling half (38) of the second rotational coupling is arranged on the second lever arm, and **in that** a pivoting movement of the lever opens one of the rotational couplings and closes the other in each case.

23. The trailer coupling according to any one of the preceding claims, **characterised in that** a spring (27) is arranged so as to counteract the weight of the tow hook (1).

24. The trailer coupling according to the preceding claim in combination with claim 7 or 8, **characterised in that** the spring (27) is a leg spring arranged in the bearing head and is supported with one spring leg on the tow hook (1) and another spring leg on the mounting device (2, 3).

## Revendications

1. Accouplement de remorque comprenant:
a) un dispositif de montage (2, 3) monté ou apte à être monté sur un véhicule,
b) un crochet de traction (1) qui déborde du dispositif de montage (2, 3) et qui monte le dispositif de montage (2, 3) à déplacement de rotation autour d'axes d'accouplement (R₁, R₂, R₃) orientés obliquement les uns par rapport aux autres pour pouvoir déplacer le crochet de traction (1) sélectivement dans une position de fonctionnement qui permet d'accrocher une remorque et une position de non fonctionnement,
c) et une roue de déplacement (10) du dispositif de montage (2, 3) montée à rotation autour d'un axe (R₁) de roue de déplacement et qui, lors d'un déplacement de rotation autour de l'axe (R₁) de la roue de déplacement, déplace le crochet de traction (1) autour d'au moins un des axes d'accouplement (R₁, R₂, R₃), **caractérisé en ce que**
d) une piste incurvée (9) est prévue sur le crochet de traction (1) et
e) la roue de déplacement (10) peut rouler sur la piste incurvée (9) pour engager le crochet de traction (1) pour le déplacer, et l'axe (10) de la roue de déplacement coupe au moins l'un des axes d'accouplement (R₁, R₂).

2. Accouplement de remorque selon l'une des revendications précédentes, **caractérisé en ce qu'**au cours du déplacement du crochet de traction (1), le ou les axes d'accouplement (R₁, R₂, R₃) s'alignent sur l'axe (R₁) de la roue de déplacement et **en ce que** la roue de déplacement (10) entraîne le crochet de traction (1) lors de son déplacement de rotation, le crochet de traction (1) exécutant un déplacement de rotation autour de l'axe (R₁) de la roue de déplacement lorsqu'il est entraîné.

3. Accouplement de remorque selon la revendication précédente, **caractérisé en ce que** lorsque le dispositif de montage (2, 3) est monté sur le véhicule, l'axe (R₁) de la roue de déplacement est orienté parallèlement à l'axe X ou de préférence à l'axe Y du véhicule ou présente au moins une composante axiale parallèle à l'axe X ou l'axe Y, de telle sorte que la roue de déplacement (10) entraîne le crochet de traction (1) en étant assistée par la gravité.

4. Accouplement de remorque selon l'une des revendications précédentes, **caractérisé en ce que** la piste incurvée (9) présente une branche incurvée (9a) autour d'au moins l'un des axes d'accouplement (R₁, R₂, R₃) et de préférence une deuxième branche (9c) incurvée autour d'un autre des axes d'accouplement (R₁, R₂, R₃).

5. Accouplement de remorque selon l'une des revendications précédentes, **caractérisé en ce que** la roue de déplacement (10) est une roue dentée et l'engagement de déplacement un engagement denté.

6. Accouplement de remorque selon l'une des revendications précédentes, **caractérisé en ce que** la roue de déplacement (10) est une roue conique.

7. Accouplement de remorque selon l'une des revendications précédentes, **caractérisé en ce que** le crochet de traction (1) présente une tête de montage (6) qui forme avec un boîtier de montage (2) du dispositif de montage (2, 3) une articulation dans laquelle le crochet de traction (1) peut se déplacer en rotation autour des axes d'accouplement (R₁, R₂, R₃) et **en ce que** la piste incurvée (9) suit le contour de la surface de la tête de montage (6) et est disposée de préférence à la périphérie de la tête de montage (6).

8. Accouplement de remorque selon l'une des revendications précédentes, **caractérisé en ce que** le crochet de traction (1) présente une tête sphérique de montage (6) qui forme avec le boîtier de montage (2) du dispositif de montage (2, 3) une articulation dans laquelle le crochet de traction (1) peut être déplacé en rotation autour des axes d'accouplement (R₁, R₂, R₃) et **en ce que** la piste incurvée (9) décrit un cercle partiel autour d'au moins l'un des axes d'accouplement (R₁, R₂, R₃) et est incurvée en suivant au moins une méridienne étroitement équidistante de la tête de montage (6).

9. Accouplement de remorque selon l'une des revendications précédentes, **caractérisé en ce que** le crochet de traction (1) est maintenu en position de fonctionnement ou en position de non fonctionnement au moyen d'un organe d'encliquetage (14) et **en ce que** l'engagement d'encliquetage de l'organe d'encliquetage (14) et de préférence du crochet de traction (1) formé en position de fonctionnement ou en position de non fonctionnement peut être libéré lorsqu'une force est appliquée sur le crochet de traction (1) par la roue de déplacement (10) en engagement de déplacement.

10. Accouplement de remorque selon l'une des revendications précédentes, **caractérisé en ce qu'**un organe de guidage (14) et de préférence l'organe d'encliquetage (14) selon la revendication précédente guident le crochet de traction (1) lors de son déplacement autour d'un des axes d'accouplement (R₁, R₂, R₃).

11. Accouplement de remorque selon l'une des revendications précédentes, **caractérisé en ce qu'**il présente au moins un organe de butée (10, 14), **en ce qu'**en engagement de déplacement, le crochet de traction (1) peut être amenée autour d'au moins un des axes d'accouplement (R₁, R₂, R₃) en contact de butée contre l'organe de butée (10, 14) et **en ce que** l'organe de butée (10, 14) forme un autre des axes d'accouplement (R₁, R₂, R₃) lorsqu'il est en contact de butée, l'organe d'encliquetage (14) de preference selon l'une des deux revendications précédentes ou la roue de déplacement (10) formant l'organe de butée (10, 14).

12. Accouplement de remorque selon l'une des revendications précédentes, **caractérisé en ce qu'**il présente un dispositif de blocage (20) doté d'au moins un organe de blocage (21) monté à déplacement par le dispositif de montage (2, 3) et **en ce que** l'organe de blocage (21) peut être déplacé par rapport à la roue de déplacement (10) avec engagement de blocage du crochet de traction (1) en correspondance mécanique ou de préférence en correspondance géométrique pour bloquer le crochet de traction (1) dans la position de fonctionnement ou la position de non fonctionnement.

13. Accouplement de remorque selon l'une des revendications précédentes, **caractérisé en ce qu'**un élément complémentaire de blocage (23, 23') adapté à la forme de l'organe de blocage (21) est une surface extérieure du crochet de traction (1) et **en ce que** l'engagement de blocage est établi par le contact entre l'organe de blocage (21) et l'organe complémentaire de blocage (23, 23').

14. Accouplement de remorque selon l'une des deux revendications précédentes, **caractérisé en ce que** le dispositif de montage (2, 3) monte l'organe de blocage (21) à déplacement de translation et le guide de préférence linéairement.

15. Accouplement de remorque selon l'une des trois revendications précédentes, **caractérisé en ce que** le dispositif de blocage (20) comprend un organe d'entraînement (22) monté à rotation par le dispositif de montage (2, 3), de préférence une broche (22) qui engage l'organe de blocage (21) de manière filetée et **en ce que** le dispositif de montage (2, 3) guide l'organe de blocage (21) par rapport à l'axe (S) du filet en l'empêchant de tourner.

16. Accouplement de remorque selon l'une des quatre revendications précédentes, **caractérisé en ce que** l'organe de blocage (21) se rétrécit de préférence coniquement dans la direction dans laquelle il peut être amené en engagement de blocage.

17. Accouplement de remorque selon l'une des cinq revendications précédentes, **caractérisé en ce que** le dispositif de blocage (20) comprend un autre organe de blocage (21) et **en ce que** les organes de blocage (21) peuvent être déplacés en direction l'un de l'autre en engagement de blocage.

18. Accouplement de remorque selon la revendication précédente, **caractérisé en ce que** les organes de blocage (21) sont montés de manière flottante parallèlement à une direction dans laquelle ils peuvent être déplacés en engagement de blocage.

19. Accouplement de remorque selon l'une des sept revendications précédentes, **caractérisé en ce que** des moteurs (13, 24) sont prévus respectivement pour la roue de déplacement (10) et pour le dispositif de blocage (20).

20. Accouplement de remorque selon l'une des revendications 12 à 18, **caractérisé en ce qu'**un moteur commun (30) et un mécanisme d'inversion (31-39) sont prévus pour la roue de déplacement (10) et pour le dispositif de blocage (20) et **en ce que** dans une première position, le mécanisme d'inversion (31-39) accouple mécaniquement le moteur (30) à la roue de déplacement (10) et dans une deuxième position l'accouple à l'organe de blocage (21), le mécanisme d'inversion (31-39) assurant l'inversion de préférence uniquement entre ces deux positions.

21. Accouplement de remorque selon la revendication précédente, **caractérisé en ce que** le dispositif de blocage (20) comprend un organe d'entraînement (22) monté à rotation et accouplé à l'organe de blocage (21) de telle sorte que l'organe de blocage (21) peut être amené en engagement de blocage et hors de l'engagement de blocage par un déplacement de rotation de l'organe d'entraînement (22), **en ce que** le moteur (30) entraîne un premier arbre et un deuxième arbre et **en ce que** le mécanisme d'inversion (31-39) accouple sélectivement le premier arbre à la roue de déplacement (10) ou le deuxième arbre à l'organe d'entraînement (22).

22. Accouplement de remorque selon la revendication précédente, **caractérisé en ce que** le mécanisme d'inversion (31-39) présente un premier accouplement de rotation (33, 37) pour la roue de déplacement (10), un deuxième accouplement de rotation (34, 38) pour l'organe d'entraînement (22) et un levier (35) qui peut pivoter en va-et-vient et qui présente un premier bras de levier et un deuxième bras de levier, **en ce qu'**une moitié d'accouplement (37) du premier accouplement de rotation est disposée sur le premier bras de levier et une moitié d'accou-plement (38) du deuxième accouplement de rotation est disposée sur le deuxième bras de levier et **en ce qu'**un déplacement de pivotement du levier ouvre l'un des accouplements de rotation et ferme l'autre.

23. Accouplement de remorque selon l'une des revendications précédentes, **caractérisé en ce qu'**un ressort (27) est disposé de manière à s'opposer au poids du crochet de traction (1).

24. Accouplement de remorque selon la revendication précédente combinée avec les revendications 7 ou 8, **caractérisé en ce que** le ressort (27) est un ressort à lame disposé dans la tête de montage et s'appuie par une branche du ressort sur le crochet de traction (1) et par une autre branche du ressort sur le dispositif de montage (2, 3).
